# EUROPEAN PATENT APPLICATION

(11) **EP 4 534 220 A1**
(43) Date of publication of application: **09.04.2025**
(21) Application number: 24801066.2
(22) Date of filing: 20.05.2024
(51) Int. Cl.: B21K 1/04, B21J 5/08, B21J 5/10, F16C 33/64

(54) **METHOD FOR MANUFACTURING BEARING ELEMENT, METHOD FOR MANUFACTURING CYLINDRICAL MEMBER, BEARING, METHOD FOR MANUFACTURING MACHINE DEVICE, METHOD FOR MANUFACTURING VEHICLE, MACHINE DEVICE, AND VEHICLE**

(30) Priority: 23.08.2023 JP 2023135416
(71) Applicant: NSK Ltd., Tokyo 141-8560 (JP)
(72) Inventor: KIMURA, Yutaroh, Fujisawa-shi Kanagawa 2518501 (JP); KIKUCHI, Tokumasa, Fujisawa-shi Kanagawa 2518501 (JP)
(74) Representative: Grünecker Patent- und Rechtsanwälte PartG mbB
(86) International application number: PCT/JP2024/018483
(87) International publication number: WO 2025/041395

(57) **Abstract**

A method for manufacturing a bearing element includes a first step of preparing a workpiece subjected to upsetting processing; a second step of forming a depression (DP1), a flange (FR1), and a first axial surface (AX1) in the workpiece by performing plastic processing once or twice; and a third step of punching out a bottom portion of the depression (DP1) of the workpiece. The depression (DP1) has a depth in an axial direction with respect to the first axial surface (AX1). The flange (FR1) extends radially outward. The first axial surface (AX1) formed in the second step provides one end surface of the bearing element. The flange (FR1) formed in the second step has a surface height substantially the same as or higher than the first axial surface (AX1) in a radially outer end portion.

## Description

### TECHNICAL FIELD

The present disclosure relates to a method for manufacturing a bearing element, a method for manufacturing a tubular member, a bearing, a method for manufacturing a mechanical device, a method for manufacturing a vehicle, a mechanical device, and a vehicle.

Priority is claimed on Japanese Patent Application No. 2023-135416, filed August 23, 2023, the content of which is incorporated herein by reference.

### BACKGROUND ART

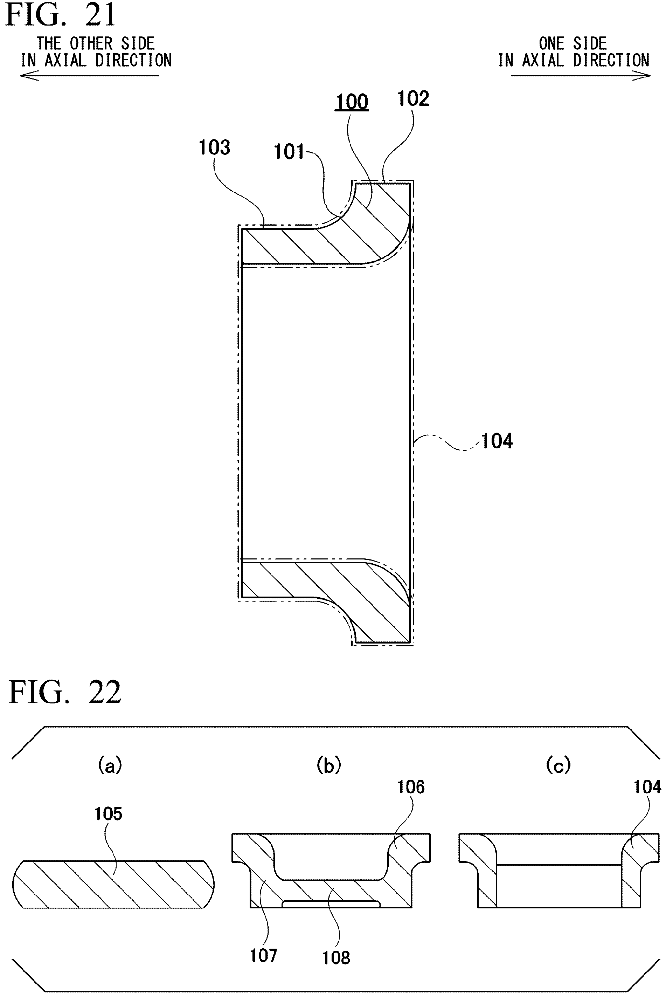

FIG. 21 shows an inner ring 100 constituting a radial angular ball bearing. The inner ring 100 is provided with an inner ring trajectory 101 having substantially a quarter-circular arc-shaped cross section in an axially intermediate portion on an outer circumferential surface. In addition, the inner ring 100 has a cylinder surface-shaped large diameter portion (groove shoulder portion, flange portion) 102 on the outer circumferential surface of a part on one side in an axial direction (right side in FIG. 21) and has a cylinder surface-shaped small diameter portion 103 on the outer circumferential surface of a part on the other side in the axial direction (left side in FIG. 21).

Tubular mechanical components such as inner rings of angular ball bearings are made by performing forging processing with respect to a metal material and then performing finishing processing such as cutting processing or grinding processing.

Patent Document 1 (Japanese Patent Application, Publication No. 2005-288505) describes a method for making two sets of inner rings and outer rings, each of which constitutes a tapered roller bearing, from one columnar metal material. The method described in Patent Document 1 includes a step of performing hot forging with respect to a piece of columnar metal material to obtain a piece of stepped cylindrical pre-processed material, and a step of separating the pre-processed material into two pieces of tubular post-processed material having diameters different from each other. Moreover, the method described in Patent Document 1 includes a step of performing cold forging and separation processing with respect to a piece of post-processed material, of the two pieces of post-processed material, having a smaller diameter to obtain two tubular members having diameters different from each other and then performing finishing processing with respect to these tubular members to obtain one set of an inner ring and an outer ring, and a step of performing cold forging and separation processing with respect to a post-processed material, of the two post-processed materials, having a larger diameter to obtain two tubular members having diameters different from each other and then performing finishing processing with respect to these tubular members to obtain another set of an inner ring and an outer ring.

### Citation List

### Patent Document

Patent Document 1: Japanese Patent Application, Publication No. 2005-288505

### SUMMARY OF INVENTION

### Technical Problem

According to the manufacturing method described in Patent Document 1, when axial dimensions of the inner ring and the outer ring of each set are almost the same, tubular members for obtaining the inner rings and the outer rings can be manufactured with a high material yield rate. However, for example, the manufacturing method described in Patent Document 1 is not suitable for mass production of inner rings used in combination with outer rings having significantly different axial dimensions, such as hub inner rings constituting hub unit bearings for supporting wheels of vehicles with respect to suspension devices.

An object of aspects of the present invention is to provide manufacturing methods which are advantageous in reducing manufacturing costs and/or improving product quality.

### Solution to Problem

A method for manufacturing a bearing element according to an aspect of the present invention has a first step of preparing a workpiece subjected to upsetting processing; a second step of forming a depression, a flange, and a first axial surface in the workpiece by performing plastic processing once or twice; and a third step of punching out a bottom portion of the depression of the workpiece. The depression has a depth in an axial direction with respect to the first axial surface, and the flange extends radially outward. The first axial surface formed in the second step provides one end surface of the bearing element. The flange formed in the second step has a surface height substantially the same as or higher than the first axial surface in a radially outer end portion.

In a method for manufacturing a tubular member according to another aspect of the present invention, a tubular member is provided with an outer circumferential surface having a cylinder surface-shaped large diameter portion provided on one side in an axial direction, a cylinder surface-shaped small diameter portion provided in the other side part in the axial direction, and a connection surface portion connecting the large diameter portion and the small diameter portion. The method for manufacturing a tubular member includes an upsetting step of crushing a columnar raw material in the axial direction to obtain a disk-shaped material having an axial dimension smaller than an axial dimension of the raw material and an outer diameter larger than an outer diameter of the raw material; a forming step of performing plastic processing with respect to the disk-shaped material to obtain an intermediate material including an intermediate tube portion having the large diameter portion, the small diameter portion, and the connection surface portion on an outer circumferential surface and a partition wall portion blocking an end portion opening of the intermediate tube portion on the other side in the axial direction; and a punching step of punching out a radially inner side part of the intermediate tube portion and the partition wall portion in the axial direction. An axial dimension of the intermediate material or an axial dimension of a preliminary intermediate material obtained in the middle of the forming step is larger than an axial dimension of the tubular member.

A mechanical device according to another aspect of the present invention includes a tubular mechanical component provided with an outer circumferential surface having a cylinder surface-shaped large diameter portion provided in one side part in an axial direction, a cylinder surface-shaped small diameter portion provided in the other side part in the axial direction, and a connection surface portion connecting the large diameter portion and the small diameter portion. A metal flow (fiber flow, forging streamline) inside the mechanical component has an inclined portion increasingly inclined in a direction toward a radially outer side as it goes from the other side in the axial direction toward one side in the axial direction in an axially intermediate portion of the mechanical component. The metal flow is denser in the inclined portion than in parts present around the inclined portion.

A method for manufacturing a bearing according to another aspect of the present invention includes a step of manufacturing a bearing element by the foregoing manufacturing method, and a step of assembling a bearing using the bearing element.

A method for manufacturing a mechanical component according to another aspect of the present invention includes a step of manufacturing a mechanical component by the foregoing manufacturing method.

A method for manufacturing a mechanical device according to another aspect of the present invention includes a step of manufacturing a bearing element by the foregoing manufacturing method.

A method for manufacturing a vehicle according to another aspect of the present invention includes a step of manufacturing a bearing element by the foregoing manufacturing method.

A bearing according to another aspect of the present invention includes a bearing element having a trace indicating that the bearing element was manufactured by the foregoing manufacturing method.

A bearing according to another aspect of the present invention includes a main body having a tubular body and a flange extending outward from the tubular body. The main body further has a first axial surface that is one end surface in an axial direction, a second axial surface that is another end surface in the axial direction, an inner circumferential surface of the tubular body, a first outer circumferential surface that is an outer circumferential surface of the tubular body, a second outer circumferential surface that is an outer circumferential surface of the flange, and a transition surface between the first outer circumferential surface and the second outer circumferential surface. The flange has a first corner between the first axial surface and the second outer circumferential surface, and a second corner between the transition surface and the second outer circumferential surface. A metal flow of the main body has a first pattern which continues along the first axial surface in the vicinity of the first axial surface, a second pattern which continues along the second outer circumferential surface in the vicinity of the second outer circumferential surface, a third pattern which continues along the transition surface in the vicinity of the transition surface, and a plurality of continuous lines each of which continues across the first pattern, the second pattern, and the third pattern. An interval between the plurality of continuous lines in the third pattern is narrower than an interval between the plurality of continuous lines in the first pattern. The plurality of continuous lines have a plurality of corner elements arranged in the vicinity of the first corner. The plurality of corner elements each have angles that gradually becomes sharper as they approach the first corner.

### Advantageous Effects of Invention

According to the aspects of the present invention, manufacturing methods which are advantageous in reducing manufacturing costs and/or improving product quality are provided.

### BRIEF DESCRIPTION OF DRAWINGS

[FIG. 1] FIG. 1 is a cross-sectional view of a hub unit bearing serving as a mechanical device of a first example.
[FIG. 2] FIG. 2 is a partial cross-sectional view of an inner ring constituting the hub unit bearing of the first example.
[FIG. 3] FIG. 3 is a cross-sectional view showing a method for manufacturing a tubular member of the first example in the order of steps.
[FIG. 4] Part (a) of FIG 4 is a cross-sectional view showing an ending stage of a second step in the method for manufacturing a tubular member of the first example, and part (b) is an enlarged view of the part A in part (a).
[FIG. 5] Part (a) of FIG. 5 is a half cross-sectional view showing a starting stage of the second step in the method for manufacturing a tubular member of the first example, and part (b) is a half cross-sectional view showing the ending stage of the second step.
[FIG. 6] FIG. 6 is a cross-sectional view showing an ending stage of a third step in the method for manufacturing a tubular member of the first example.
[FIG. 7] Part (a) of FIG. 7 is a half cross-sectional view showing a starting stage of the third step in the method for manufacturing a tubular member of the first example, and part (b) is a half cross-sectional view showing the ending stage of the third step.
[FIG. 8] FIG. 8 is a cross-sectional view showing a method for manufacturing a tubular member of a second example in the order of steps.
[FIG. 9] Part (a) of FIG. 9 is a half cross-sectional view showing the starting stage of the second step in the method for manufacturing a tubular member of the second example, and part (b) is a half cross-sectional view showing the ending stage of the second step.
[FIG. 10] FIG. 10 is a cross-sectional view showing a method for manufacturing a tubular member of a third example in the order of steps.
[FIG. 11] FIG. 11 is a cross-sectional view showing the ending stage of the second step in the method for manufacturing a tubular member of the third example.
[FIG. 12] FIG. 12 is a cross-sectional view showing a method for manufacturing a tubular member of a fourth example in the order of steps.
[FIG. 13] Part (a) of FIG. 13 is a half cross-sectional view showing the starting stage of the third step in the method for manufacturing a tubular member of the first example, and part (b) is a half cross-sectional view showing the ending stage of the third step.
[FIG. 14] FIG. 14 is a cross-sectional view showing a method for manufacturing a tubular member of a fifth example in the order of steps.
[FIG. 15] FIG. 15 is a cross-sectional view showing the ending stage of the second step in the method for manufacturing a cylinder member of the fifth example.
[FIG. 16] FIG. 16 is a cross-sectional view showing a method for manufacturing a tubular member of a sixth example in the order of steps.
[FIG. 17] FIG. 17 is a partially enlarged view showing the ending stage of the second step in the method for manufacturing a tubular member of the sixth example.
[FIG. 18] FIG. 18 is a cross-sectional view showing a method for manufacturing a tubular member of a seventh example in the order of steps.
[FIG. 19] FIG. 19 is a partially enlarged view showing the ending stage of the third step in the method for manufacturing a tubular member of the seventh example.
[FIG. 20] FIG. 20 is a cross-sectional view showing a method for manufacturing a tubular member of an eighth example in the order of steps.
[FIG. 21] FIG. 21 is a cross-sectional view of an inner ring constituting a radial angular ball bearing.
[FIG. 22] FIG. 22 is a cross-sectional view showing a comparative example of the method for manufacturing a tubular member in the order of steps.
[FIG. 23] FIG. 23 is an enlarged view of the upper right part in FIG. 22(b).
[FIG. 24] FIG. 24 is a partially schematic view of a vehicle provided with a hub unit bearing (bearing, bearing device).

### DESCRIPTION OF EMBODIMENT

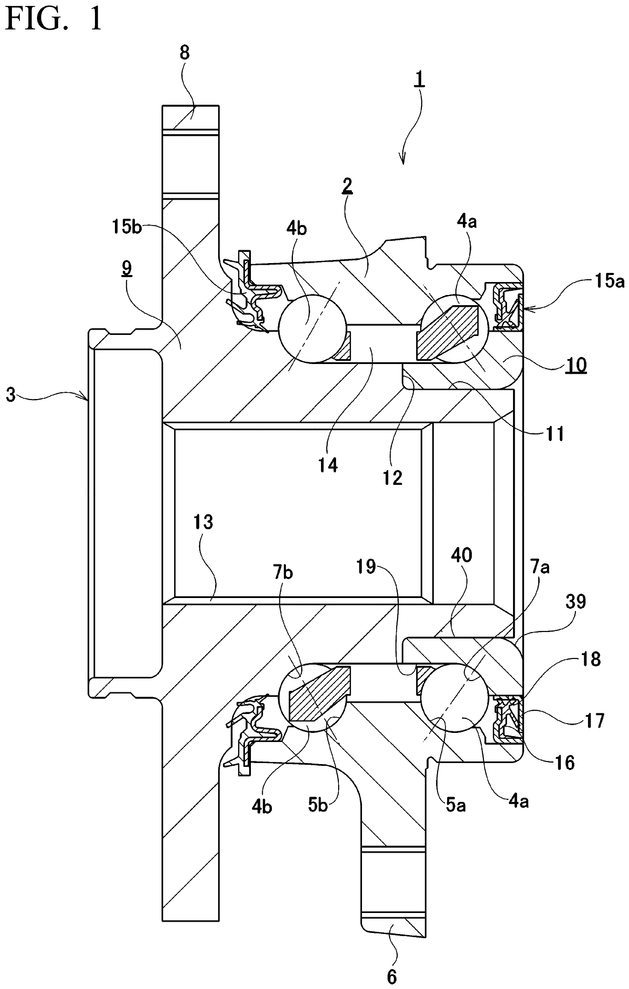

Hereinafter, an embodiment of the present invention will be described with reference to FIGS. 1 to 24. The reference symbols in the parentheses correspond to the reference signs indicated in the description of examples, which will be described below.

According to an embodiment, a method for manufacturing a bearing element (tubular member) includes a first step (initial preparation step), a second step (plastic processing step), and a third step (punching step). Additionally, the method for manufacturing a bearing element (tubular member) can include at least another step in addition to the foregoing steps. According to this manufacturing method, a forming load can be kept small, and improvement in efficiency of material usage (material yield rate) can be achieved. In addition, improvement in strength and/or improvement in quality of a product can be achieved.

In the first step, a workpiece (WP1) is prepared. The workpiece (WP1) which has been subjected to upsetting processing and has a predetermined shape is supplied, or the workpiece (WP1) having a predetermined shape by the upsetting processing in the first step is obtained. The workpiece (WP1) which has been prepared in the first step is used in the next step.

According to an example, the workpiece (WP1) which has been prepared in the first step has substantially a columnar shape (substantially a disk shape) including a first end surface (ES1), a second end surface (ES2), and an outer circumferential surface (CS1). According to an example, the first end surface (ES1) is a relatively uniform flat surface or a curved surface. In another example, the first end surface (ES1) can have a different shape. The second end surface (ES2) is a surface on a side opposite to the first end surface (ES1). According to an example, the circumferential surface (CS1) of the workpiece (WP1) has a curved shape of which a diameter changes in an axial direction. According to an example, the workpiece (WP1) is set to have an outer diameter (width in a radial direction) which is larger than the axial length (thickness, height) between the first end surface (ES1) and the second end surface (ES2). When the axial length of the workpiece (WP1) is AL1 and the outer diameter is DM1, AL1/DM1 can be set to approximately 1/2, 1/3, 1/4, 1/5, 1/6, 1/7, 1/8, 1/9, 1/10, or smaller, for example. The foregoing numerical values are merely examples, and different numerical values can be applied in another example. Alternatively and/or additionally, in the first step, the workpiece (WP1) having a modified shape of the foregoing shape or a shape other than the foregoing shape can be prepared.

According to an example, the upsetting processing in the first step includes pressurizing processing (for example, cold forging) in which the axial length (height) of a material is reduced and the outer diameter (width in the radial direction) is increased.

According to an example, a raw material (20, 20a) is compressed in the axial direction using a press apparatus to form the workpiece (WP1) having a shape modified from a substantially columnar shape (substantially disk shape) or a shape different from a substantially columnar shape. For example, the workpiece (WP1) obtained in the first step can have thickness change (capacitance change) provided in a predetermined area in the radial direction. The thickness change can include a groove having a predetermined depth and extending in a circumferential direction and/or a protrusion portion having a predetermined height and extending in the circumferential direction. According to an example, regarding the workpiece (WP1) obtained in the first step, for example, a processing tool is designed based on morphological parameters for final bearing elements/tubular members, processing parameters in other steps, and the like, and the shape of the workpiece (WP1) in an initial stage is set. Due to such shape control in the initial stage, improvement in efficiency of material usage (material yield rate) can be achieved. In addition, improvement in strength of a product can be achieved based on a flow form of a material.

In the second step (plastic processing step), a depression (DP1), a flange (FR1), and a first axial surface (AX1) are formed in the workpiece (WP1) by performing plastic processing once or twice using a punching tool (for example, hot forging). The first axial surface (AX1) is formed by performing plastic processing with respect to the first end surface (ES1) of the workpiece (WP1). A workpiece (WP3, WP4) formed in the second step has a circumferential wall (CW1) surrounding the depression (DP1), and the flange (FR1) having a shape extending radially outward with respect to the circumferential wall (CW1). The flange (FR1) is provided on a side of the first axial surface (AX1) in the circumferential wall (CW1). In the workpiece (WP3, WP4), the circumferential wall (CW1) has a second axial surface (AX2) that is an axial end surface disposed on a side opposite to the first axial surface (AX1). According to an example, the first axial surface (AX1) and/or the second axial surface (AX2) includes a surface perpendicular to the axial direction. The first axial surface (AX1) formed in the second step provides one end surface of a bearing element (tubular member (21, 21a)). According to an example, at least a part of the first axial surface (AX1) is formed in the flange (FR1). The depression (DP1) has a depth in the axial direction with respect to the first axial surface (AX1). The flange (FR1) formed in the second step has a surface height which is substantially the same as or higher than the first axial surface (AX1) in a radially outer end portion (ROE) that is an area in the vicinity of a radially outer end/outer edge. For example, the axial surface shape (axial surface profile) of the radially outer end portion (ROE) is at a height position which is at the same height as or higher than the first axial surface (AX1) in the axial direction with respect to a predetermined reference surface which traverses the flange (FR1) and is perpendicular to the axial direction.

The range of the radially outer end portion (ROE) in the radial direction is a radial length from the radially outer end/outer edge of the flange (FR1) and can be set to 10 mm, 5.0 mm, 4.0 mm, 3.0 mm, 2.0 mm, 1.0 mm, 0.8 mm, 0.6 mm, 0.4 mm, 0.2 mm, or shorter, for example. Alternatively, for example, when the outer diameter of the flange (FR1) is FD1 and the range of the radially outer end portion (ROE) in the radial direction is EW1, EW1/FD1 can be set to approximately 1/10, 1/12, 1/14, 1/16, 1/18, 1/20, 1/30, 1/40, 1/50, or smaller. The foregoing numerical values are merely examples, and different numerical values can be applied in another example. Alternatively and/or additionally, in the second step, a modified shape of the foregoing shape or a shape other than the foregoing shape may be set.

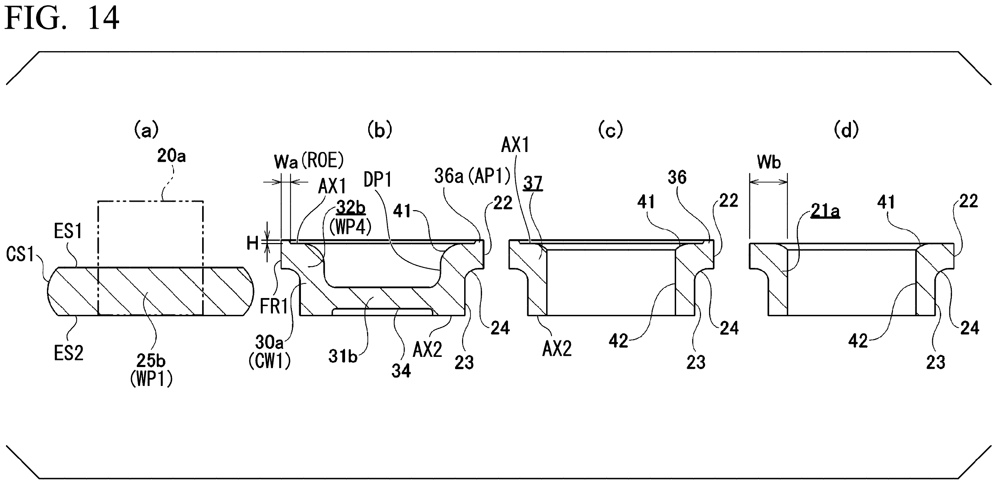

In the plurality of examples shown in FIGS. 14 to 20, the second step has a step of simultaneously forming the depression (DP1), the flange (FR1), the first axial surface (AX1), and an annular projection (AP1) using a first punch (PC1) with respect to the workpiece (WP1) which has been subjected to upsetting processing. In the second step, the depression (DP1), the flange (FR1), the first axial surface (AX1), and the annular projection (AP1) are formed by performing punching processing once. The annular projection (AP1) has a shape protruding axially outward with respect to the first axial surface (AX1) in the radially outer end portion (ROE) of the flange (FR1).

According to an example, the first punch (PC1) has a first base portion (P11), a first projection portion (P12), and a first punch surface (P13) including a tip area of the first projection portion (P12). The first punch surface (P13) corresponds to a bottom surface of the depression (DP1). The first punch (PC1) has a second punch surface (P14) including an outer circumferential surface of the first projection portion (P12), and a third punch surface (P15) including an annular surface provided in the first base portion (P11). The second punch surface (P14) corresponds to an inner wall surface (inner circumferential surface) of the depression (DP1). The third punch surface (P15) corresponds to the first axial surface (AX1). The first punch (PC1) has a fourth punch surface (P16) serving as a transition surface between the second punch surface (P14) and the third punch surface (P15), and a step (depression, groove) (P17) provided in the vicinity of a radially outer edge on the first punch surface (P13) and extending in the circumferential direction. The step (P17) corresponds to the annular projection (AP1). The first punch (PC1) is designed based on morphological parameters for final bearing elements (tubular members), processing parameters in other steps, and the like, the shape of the workpiece (WP4) after plastic processing is set. Due to such shape control, improvement in efficiency of material usage (material yield rate) can be achieved. In addition, improvement in strength of a product can be achieved based on a flow form of a material.

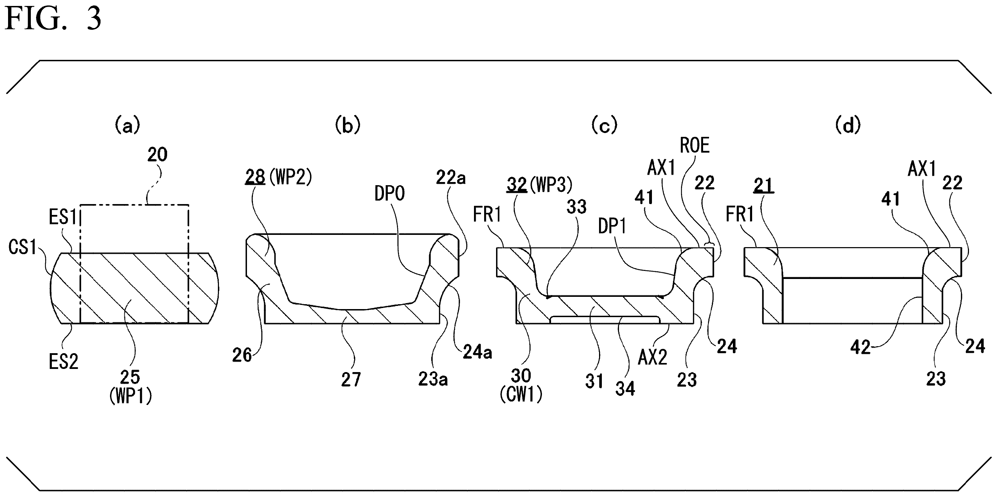

In the plurality of examples shown in FIGS. 3 to 13, the second step has first plastic processing of forming a preliminary depression (DP0) using a second punch (PC2) with respect to the workpiece (WP1) which has been subjected to upsetting processing. In addition, the second step has second plastic processing of simultaneously forming the depression (DP1), the flange (FR1), and the first axial surface (AX1) using a third punch (PC3) with respect to a workpiece (WP2) in which the preliminary depression (DP0) is formed after the first plastic processing. In the second plastic processing, simultaneous formation of the depression (DP1), the flange (FR1), and the first axial surface (AX1) includes enhancement of corners of the flange (FR1) in the radially outer end portion (ROE). For example, in the workpiece (WP3) after the second plastic processing, the corners (edge shape) of the flange (FR1) have substantially a right-angled shape. A curved edge in the workpiece (WP2) after the first plastic processing changes to a substantially right-angled edge in the workpiece (WP3) after the second plastic processing. A part of the material of the workpiece (WP2) flows radially outward by the second plastic processing using the third punch (PC3), and the workpiece (WP3) having an increased thickness in the vicinity of a radially outer end is provided.

According to an example, the second punch (PC2) has a second base portion (P21) and a second projection portion (P22), and the third punch (PC3) has a third base portion (P31) and a third projection portion (P32). The preliminary depression (DP0) is formed in the workpiece by the second projection portion (P22) of the second punch (PC2). The depression (DP1) is formed in the workpiece by the third projection portion (P32) of the third punch (PC3). The second punch (PC2) has a fifth punch surface (P25) including a tip area of the second projection portion (P22). The fifth punch surface (P25) corresponds to a bottom surface of the preliminary depression (DP0). The second punch (PC2) has a sixth punch surface (P26) including an outer circumferential surface of the second projection portion (P22). The sixth punch surface (P26) corresponds to an inner wall surface of the preliminary depression (DP0). The third punch (PC3) has a seventh punch surface (P37) including a tip area of the third projection portion (P32). The seventh punch surface (P37) corresponds to the bottom surface of the depression (DP1). The third punch (PC3) has an eighth punch surface (P38) including an outer circumferential surface of the third projection portion (P32), and a ninth punch surface (P39) including an annular surface provided in the third base portion (P31). The eighth punch surface (P38) corresponds to the inner wall surface (inner circumferential surface) of the depression (DP1). The ninth punch surface (P39) corresponds to the first axial surface (AX1). The third punch (PC3) has a tenth punch surface (P40) that is a transition surface between the eighth punch surface (P38) and the ninth punch surface (P39).

According to an example, the axial length of the third projection portion (P32) of the third punch (PC3) is smaller than that of the second projection portion (P22) of the second punch (PC2). In addition, an inclination (θ11) with respect to a center axis on the outer circumferential surface (sixth punch surface) (P26) of the second projection portion (P22) in the second punch (PC2) is larger than an inclination (θ12) with respect to a center axis on the outer circumferential surface (P35) of the third projection portion (P32) in the third punch (PC3).

According to an example, the axial length of the third projection portion (P32) of the third punch (PC3) is smaller than that of the second projection portion (P22) of the second punch (PC2). In addition, the outer diameter of the second base portion (P21) is substantially the same as the outer diameter of the third base portion (P31). In addition, the average outer diameter of the second projection portion (P22) is larger than the average outer diameter of the third projection portion (P32).

According to an example, the fifth punch surface (P25) of the second punch (PC2) has a surface shape in which the surface height is larger in a central portion than in other areas. The seventh punch surface (P37) of the third punch (PC3) has a uniform surface shape in its entirety compared to the fifth punch surface (P25).

The second punch (PC2) and the third punch (PC3) are designed based on morphological parameters for final bearing elements (tubular members), processing parameters in other steps, and the like, and the shape of the workpiece (WP3) after plastic processing is set. Due to such shape control, improvement in efficiency of material usage (material yield rate) can be achieved. In addition, improvement in strength of a product can be achieved based on a flow form of a material.

According to another embodiment, the tubular member (21, 21a) is provided with an outer circumferential surface having a cylinder surface-shaped large diameter portion (22) provided on one side in an axial direction, a cylinder surface-shaped small diameter portion (23) provided in the other side part in the axial direction, and a connection surface portion (24) connecting the large diameter portion and the small diameter portion. The method for manufacturing the tubular member (21, 21a) includes an upsetting step of crushing the columnar raw material (20, 20a) in the axial direction to obtain a disk-shaped material (25, 25a, 25b) having an axial dimension smaller than an axial dimension of the raw material (20, 20a) and an outer diameter larger than an outer diameter of the raw material (20, 20a); a forming step of performing plastic processing with respect to the disk-shaped material (25, 25a, 25b) to obtain an intermediate material (32, 32a, 32b, 32c) including an intermediate tube portion (30, 30a) having the large diameter portion (22), the small diameter portion (23), and the connection surface portion (24) on an outer circumferential surface and a partition wall portion (31, 31a, 31b) blocking an end portion opening of the intermediate tube portion (30, 30a) on the other side in the axial direction; and a punching step of punching out a radially inner side part of the intermediate tube portion (30, 30a) and the partition wall portion (31, 31a, 31b) in the axial direction. An axial dimension of the intermediate material (32, 32a, 32b, 32c) or an axial dimension of a preliminary intermediate material (28, 28a, 28b) obtained in the middle of the forming step is larger than an axial dimension of the tubular member (21, 21a).

According to an example, the tubular member (21, 21a) can be provided with an inner circumferential surface having an inclined surface portion (41) which is provided in an end portion on one side in the axial direction and of which the inner diameter increases as it goes toward one side in the axial direction, and a cylinder surface portion (42) which is provided in an axially intermediate portion and an end portion on the other side in the axial direction. In addition, the intermediate tube portion (30, 30a) can have the inclined surface portion (41) in an end portion on an inner circumferential surface on one side in the axial direction.

According to an example, the forming step can include a preforming step of performing plastic processing with respect to the disk-shaped material (25, 25a, 25b) to obtain the preliminary intermediate material (28, 28a, 28b) having a preliminary intermediate tube portion (26, 26a, 26b) and the partition wall portion (31, 31a, 31b) blocking an end portion opening of the preliminary intermediate tube portion (26, 26a, 26b) on the other side in the axial direction, and a post-forming step of crushing the preliminary intermediate material (28, 28a, 28b) in the axial direction on an inner side on an inner circumferential surface of a dice having a shape along an outer circumferential surface of the intermediate material (32, 32a, 32b, 32c) to obtain the intermediate material (32, 32a, 32b, 32c). For example, the axial dimension of the preliminary intermediate material (28, 28a, 28b) is larger than the axial dimension of the tubular member (21, 21a), and the axial dimension of the intermediate material (32, 32a, 32b, 32c) is equivalent to the axial dimension of the tubular member (21, 21a).

According to an example, in the preforming step, at least a radially outer side part on an end surface of the preliminary intermediate tube portion (26, 26a, 26b) on one side in the axial direction can be prevented from coming into contact with a forming die for performing plastic processing.

For example, the outer diameter of one side part of the preliminary intermediate tube portion (26, 26a, 26b) in the axial direction is slightly smaller than the outer diameter of the large diameter portion (22), and the outer diameter of the other side part of the preliminary intermediate tube portion (26, 26a, 26b) in the axial direction is slightly smaller than the outer diameter of the small diameter portion (23).

According to an example, the intermediate tube portion (30, 30a) has an annular protrusion portion (36, 36a, 36b) protruding to one side in the axial direction in the radially outer end portion of the end portion on one side in the axial direction. For example, the forming step is a step of obtaining the intermediate material (32, 32a, 32b, 32c) by performing plastic processing with respect to the disk-shaped material (25, 25a, 25b). The axial dimension of the intermediate material (32, 32a, 32b, 32c) is larger than the axial dimension of the tubular member (21, 21a) by the amount corresponding to an axial height of the annular protrusion portion (36, 36a, 36b). The manufacturing method includes a removing step of removing the annular protrusion portion (36, 36a, 36b) after the forming step.

For example, in the forming step, an end surface of the annular protrusion portion (36, 36a, 36b) on one side in the axial direction can be prevented from coming into contact with a forming die for performing plastic processing.

According to an example, the manufacturing method can include a uniformizing step of crushing the annular protrusion portion (36, 36a, 36b) formed in the forming step in the axial direction before the removing step to uniformize the axial height of the annular protrusion portion (36, 36a, 36b) across the entire circumference.

According to another embodiment, a mechanical device includes a tubular mechanical component (10) provided with an outer circumferential surface having a cylinder surface-shaped large diameter portion (18) provided on one side in an axial direction, a cylinder surface-shaped small diameter portion (19) provided in the other side part in the axial direction, and a connection surface portion (7a) connecting the large diameter portion (18) and the small diameter portion (19). The method for manufacturing a mechanical device includes a step of manufacturing the mechanical component (10) by performing finishing processing with respect to the tubular member (21, 21a) manufactured by the foregoing method for manufacturing a tubular member.

According to an example, the mechanical component is an inner ring (10), and the connection surface portion of the mechanical component is constituted of an inner ring trajectory (7a) having a circular arc-shaped cross section. The mechanical device is a bearing device (1).

For example, the bearing device is a hub unit bearing (1) for rotatably supporting a wheel of an automobile with respect to a suspension device.

According to another embodiment, a vehicle includes a mechanical device (1). The method for manufacturing a vehicle includes a step of manufacturing the mechanical device (1) by the foregoing method for manufacturing a mechanical device.

According to another embodiment, a mechanical device (1) includes a tubular mechanical component (10) provided with an outer circumferential surface having a cylinder surface-shaped large diameter portion (18) provided in one side part in an axial direction, a cylinder surface-shaped small diameter portion (19) provided in the other side part in the axial direction, and a connection surface portion (7a) connecting the large diameter portion and the small diameter portion. A metal flow (fiber flow, forging streamline) inside the mechanical component has an inclined portion (Tp) increasingly inclined in a direction toward an radially outer side as it goes from the other side in the axial direction toward one side in the axial direction in an axially intermediate portion of the mechanical component. The metal flow is denser in the inclined portion (Tp) than in parts present around the inclined portion (Tp).

According to an example, the mechanical component is an inner ring (10), and the connection surface portion of the mechanical component is constituted of an inner ring trajectory (7a) having a circular arc-shaped cross section. The mechanical device is a bearing device (1).

For example, the bearing device is a hub unit bearing (1) for rotatably supporting a wheel of an automobile with respect to a suspension device.

According to another embodiment, a vehicle includes the foregoing mechanical device.

According to the foregoing method for manufacturing a tubular member, it is possible to reduce manufacturing costs of a mechanical component made from a tubular member provided with an outer circumferential surface having a cylinder surface-shaped large diameter portion provided in one side part in an axial direction, a cylinder surface-shaped small diameter portion provided in the other side part in the axial direction, and a connection surface portion connecting the large diameter portion and the small diameter portion.

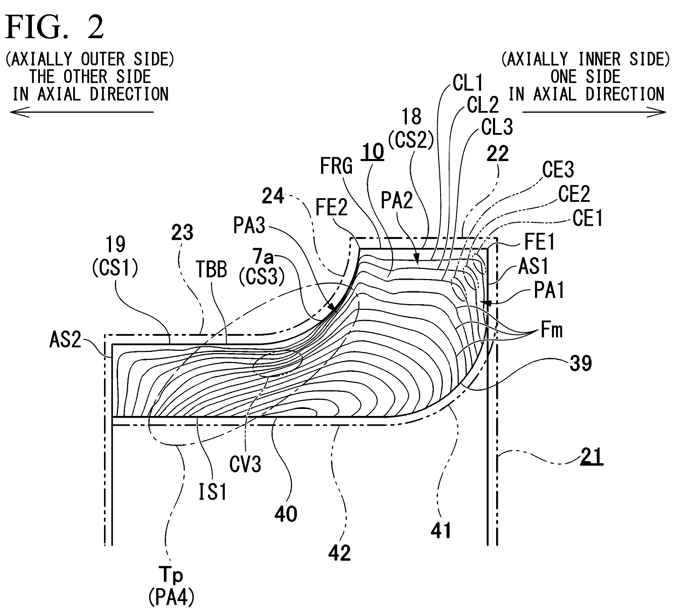

According to another embodiment, as shown in the examples of FIGS. 2, 7, and 15, a bearing element includes a main body (10) having a tubular body (TBB) and a flange (FRG) extending outward from the tubular body (TBB). The main body (10) has a first axial surface (AS1) that is one end surface in an axial direction, and a second axial surface (AS2) that is another end surface in the axial direction. In addition, the main body (10) has an inner circumferential surface (IS1) of the tubular body (TBB), a first outer circumferential surface (CS1) that is an outer circumferential surface of the tubular body (TBB), a second outer circumferential surface (CS2) that is an outer circumferential surface of the flange (FRG), and a transition surface (CS3) between the first outer circumferential surface (CS1) and the second outer circumferential surface (CS2). The flange (FRG) has a first corner (FE1) between the first axial surface (AS1) and the second outer circumferential surface (CS2), and a second corner (FE2) between the transition surface (CS3) and the second outer circumferential surface (CS2).

According to another embodiment, a bearing element (tubular member) has a trace indicating that the bearing element was manufactured by the foregoing manufacturing method. According to an example, the trace is a metal flow (metal fiber flow, fibrous metal texture, forging streamline) observed in a cross section of the bearing element (tubular member). FIGS. 2, 5, 7, 9, and 15 show examples of the bearing element (tubular member) and the metal flow in a cross section in the axial direction (axial cross section) during a manufacturing process. The trace can also be confirmed based on texture analysis and/or structure analysis different from analysis based on the metal flow.

According to an example, a metal flow of the main body (10) has a first pattern (PA1), a second pattern (PA2), and a third pattern (PA3). The first pattern (PA1) continues along the first axial surface (AS1) in the vicinity of the first axial surface (AS1). The second pattern (PA2) continues along the second outer circumferential surface (CS2) in the vicinity of the second outer circumferential surface (CS2). The third pattern (PA3) continues along the transition surface (CS3) in the vicinity of the transition surface (CS3). The metal flow of the main body (10) further has a plurality of continuous lines (CL1, CL2, CL3) each of which continues across the first pattern (PA1), the second pattern (PA2), and the third pattern (PA3).

As shown in the examples of FIGS. 2, 7, and 15, an interval between the plurality of continuous lines (CL1, CL2, CL3) in the third pattern (PA3) is narrower than an interval between the plurality of continuous lines (CL1, CL2, CL3) in the first pattern (PA1). The plurality of continuous lines (CL1, CL2, CL3) have a plurality of corner elements (CE1, CE2, CE3) arranged in the vicinity of the first corner (FE1). The plurality of corner elements (CE1, CE2, CE3) have angles that gradually becomes sharper as they approach the first corner (FE1). The corner element (CE1) is closest to the first corner (FE1). The corner element (CE3) is farther from the first corner (FE1) than the corner element (CE1) and the corner element (CE2). The corner element (CE1) has a sharper angle than the corner element (CE2). The corner element (CE2) has a sharper angle than the corner element (CE3).

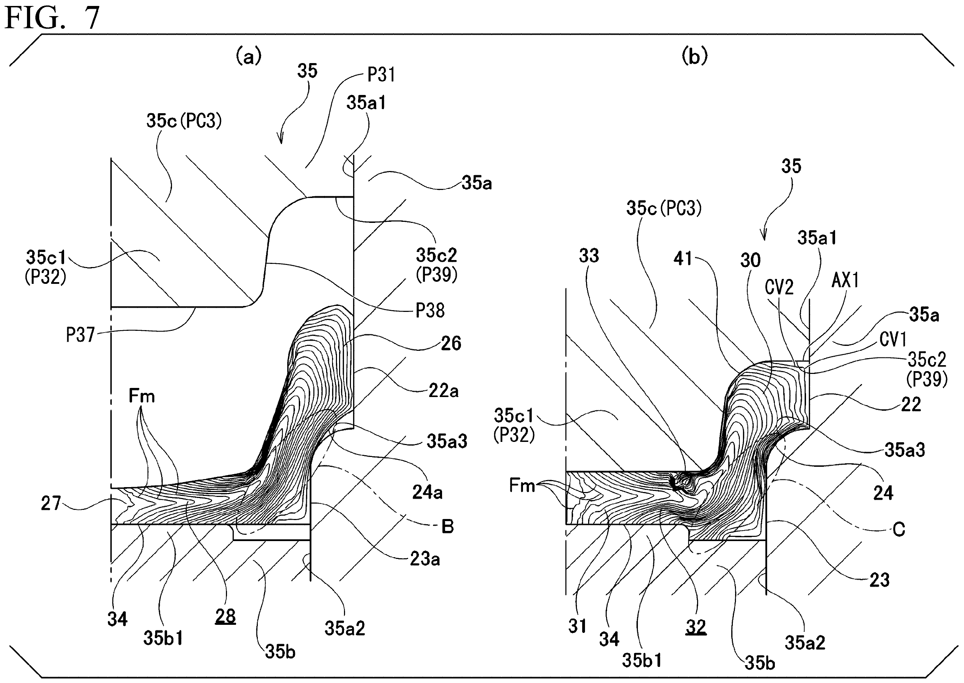

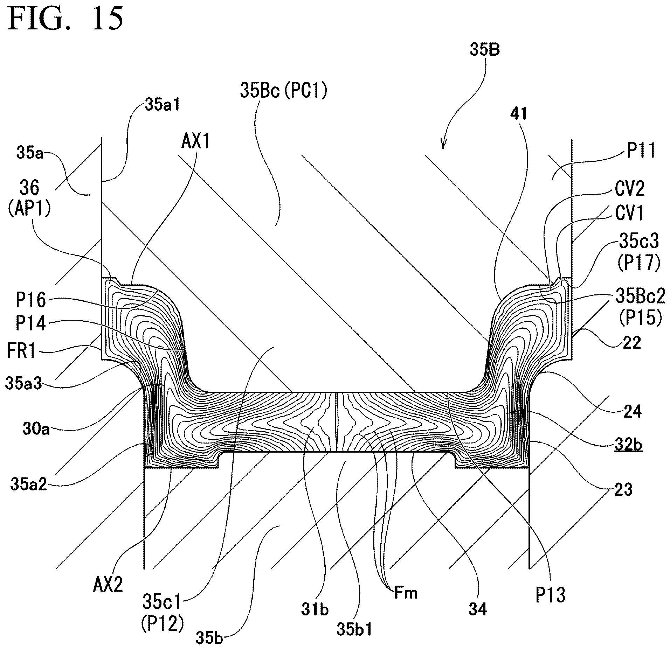

As shown in the examples of FIGS. 7 and 15, at least one of the plurality of corner elements (CE1, CE2, CE3) has a protruding shape protruding toward the first corner (FE1). At least one of the plurality of corner elements (CE1, CE2, CE3) has a first curve (CV1) protruding toward the first corner (FE1) and a second curve (CV2) protruding inward toward the first corner (FE1). For example, the first curve (CV1) and the second curve (CV2) are continuously arranged.

As shown in the examples of FIG. 2, the metal flow of the main body (10) has a fourth pattern (PA4) including a plurality of line elements extending in a direction oblique to a center axis of the main body (10) from the inner circumferential surface (IS1) toward the transition surface (CS3). In the fourth pattern (PA4), an interval between the plurality of line elements in a radially outward area is narrower than an interval between the plurality of line elements in a radially inward area. In the fourth pattern (PA4), the plurality of line elements in the radially outward area each have partially convex curves (CV3) directed radially inward.

A bearing element having a predetermined metal flow is advantageous in reducing manufacturing costs and/or improving strength. The continuous line elements of the metal flow are advantageous in increasing the strength of the main body.

According to another embodiment, a bearing includes the foregoing bearing element, and this is advantageous in reducing costs of the bearing.

According to another embodiment, a machine includes the foregoing bearing, and this is advantageous in reducing costs of the machine.

According to another embodiment, a vehicle includes the foregoing bearing, and this is advantageous in reducing costs of the vehicle.

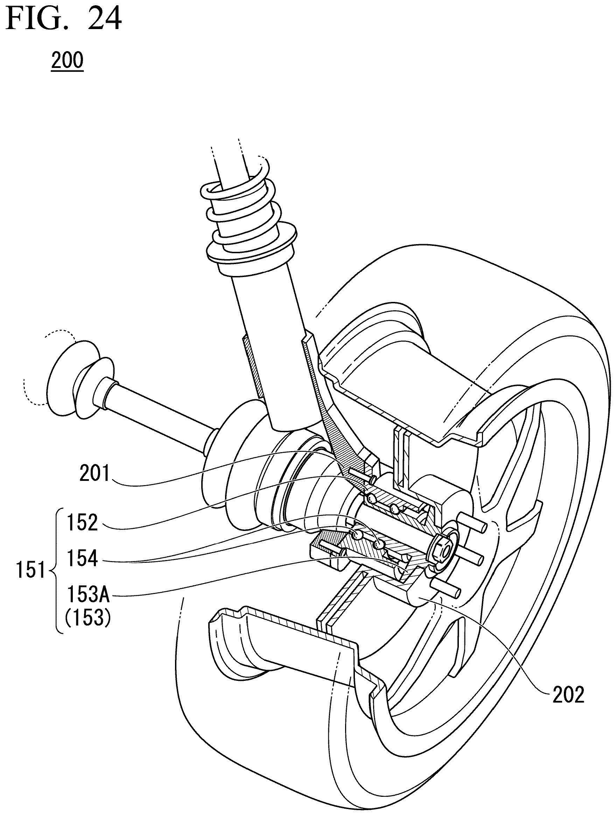

FIG. 24 is a partially schematic view of a vehicle 200 including a hub unit bearing (bearing, bearing device) 151. The foregoing bearing can also be applied to any of hub unit bearings for driving wheels and hub unit bearings for driven wheels. In FIG. 24, the hub unit bearing 151 is for a driving wheel and includes an outer ring 152, a hub 153, and a plurality of rolling elements 156. The outer ring 152 is fixed to a knuckle 201 of the suspension device using bolts or the like. The wheel 202 (and a braking rotor 22) are fixed to a flange (rotating flange) 153A provided in the hub 153 using bolts or the like. In addition, regarding the hub unit bearing 151 for a driven wheel, the vehicle 200 can have a support structure similar to that described above.

Part (a) to (c) of FIG. 22 show, as a comparative example, a method for manufacturing a tubular member (bearing element) 104 to obtain one inner ring 100 (refer to FIG. 21) from a columnar metal material by hot forging.

The method for manufacturing the tubular member 104 includes an upsetting step, a forming step, and a punching step each of which is a step performed by hot forging.

In the upsetting step, a columnar raw material that is a single metal material is crushed in the axial direction to obtain a disk-shaped material (workpiece) 105 having a smaller axial dimension and a larger outer diameter than the raw material as shown in FIG. 22(a).

In the forming step, the disk-shaped material 105 is subjected to plastic processing as in forward/rearward extrusion processing to obtain a cup-shaped intermediate material 106 as shown in FIG. 22(b). The intermediate material 106 includes an intermediate tube portion 107 having the same shape of the outer circumferential surface as the shape of the outer circumferential surface of the tubular member 104 and the same axial dimension as the axial dimension of the tubular member 104, and a partition wall portion 108 blocking the end portion opening on the other side in the axial direction, of the end portion on one side of the intermediate tube portion 107 in the axial direction (upward side in FIG. 22(b)) and the end portion on the other side in the axial direction (downward side in FIG. 22(b)).

In the punching step, in the intermediate material 106, a radially inner side part of the intermediate tube portion 107 and the partition wall portion 108 are punched out in the axial direction to obtain the tubular member 104.

In such a manufacturing method, although the tubular member 104 can be efficiently obtained from a columnar metal material with fewer man-hours, there is room for improvement in the following respects.

That is, since the tubular member 104 is made by hot forging, an oxide film (black skin) is formed on a surface thereof. If such an oxide film remains on a surface of the completed inner ring 100, it is difficult to secure shape precision and surface roughness precision required of the inner ring 100. For this reason, there is a need for the tubular member 104 to secure an machining allowance sufficient to be able to remove the oxide film on the surface by finishing processing.

However, when the intermediate material 106 is obtained by performing forward/rearward extrusion processing with respect to the disk-shaped material 105, there are cases in which a material (metal material) flowing toward one side in the axial direction does not sufficiently reach the radially outer end portion of the end portion on one side in the axial direction that is a final destination in a formation space of the intermediate material 106 present inside the forming die.

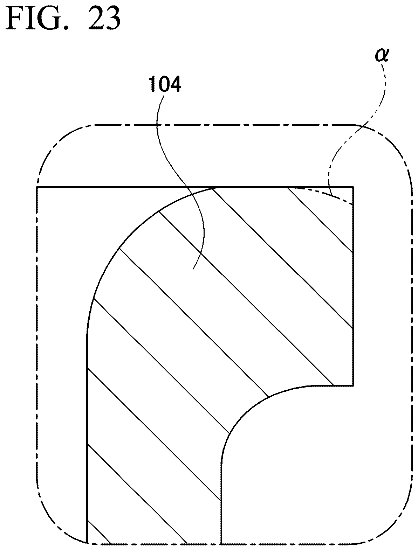

In such a case, in the intermediate material 106 and the tubular member 104, the radially outer end portion on the end surface on one side in the axial direction will have an underfill shape, for example, as indicated by the dashed line α in FIG. 23 (in the shown example, a shape retreating in a direction toward the other side in the axial direction as it goes toward the radially outer side).

As a result, there is a probability that inconvenience will occur in that the machining allowance sufficient to be able to remove the oxide film cannot be secured by finishing processing in a radially outer end portion of the tubular member 104 on the end surface on one side in the axial direction. Since tubular members in which such inconvenience has occurred are discarded, it causes the manufacturing costs of the inner ring 100 to rise.

Regarding a method for preventing occurrence of the inconvenience described above, it is possible to consider a method in which a processing load is increased when the disk-shaped material 105 is subjected to forward/rearward extrusion processing to cause a material to reliably reach the radially outer end portion of the end portion on one side in the axial direction in the formation space of the intermediate material 106.

However, in this method, due to a significant load imposed on the forming die, the size of a processing apparatus increases and the lifespan of the forming die is shortened, and therefore manufacturing costs of the inner ring 100 rise.

Regarding another method for resolving the inconvenience described above, it is possible to consider a method in which the volume of the raw material is increased and the thickness of the machining allowance provided in the tubular member 104 is increased in its entirety. According to this method, even when the radially outer end portion of the tubular member 104 on the end surface on one side in the axial direction has an underfill shape as indicated by the dashed line α in FIG. 23, it is easy to secure the machining allowance sufficient to be able to remove the oxide film by finishing processing in the radially outer end portion of the tubular member 104 on the end surface on one side in the axial direction.

However, in this method, a large amount of machining allowance is removed by finishing processing, that is, the yield rate during manufacturing of the inner ring 100 deteriorates, and therefore manufacturing costs of the inner ring 100 rise.

Hereinafter, examples will be described. In each of the examples, it is possible to reduce manufacturing costs of a mechanical component made from a tubular member provided with an outer circumferential surface having a cylinder surface-shaped large diameter portion provided on one side in an axial direction, a cylinder surface-shaped small diameter portion provided in the other side part in the axial direction, and a connection surface portion connecting the large diameter portion and the small diameter portion.

### [First example]

A first example will be described using FIGS. 1 to 7.

The present example is an example of manufacturing a tubular member (bearing element) for obtaining an inner ring 10 of a hub unit bearing 1 shown in FIG. 1.

The method for manufacturing a tubular member can be aimed at manufacturing an arbitrary tubular member provided with an outer circumferential surface having a cylinder surface-shaped large diameter portion provided in one side part in an axial direction, a cylinder surface-shaped small diameter portion provided in the other side part in the axial direction, and a connection surface portion connecting the large diameter portion and the small diameter portion. For example, the method for manufacturing a tubular member can be aimed at manufacturing a bearing device having a structure different from that in the example shown in FIG. 1, specifically, a tubular member (bearing element) for obtaining an inner ring, a slide bearing, and the like constituting a single-row or double-row angular ball bearing. In this case, the inner ring and the slide bearing can be manufactured by performing finishing processing such as cutting processing or grinding processing with respect to the tubular member (bearing element).

The method for manufacturing a tubular member can be aimed at manufacturing a tubular member for obtaining a mechanical device such as a machine tool or various kinds of mechanical components constituting a vehicle. In this case, the mechanical component can be manufactured by performing finishing processing such as cutting processing or grinding processing with respect to a tubular member.

The material of a tubular member is not particularly limited as long as it is a metal material which can be subjected to hot forging, and it is possible to employ various kinds of metal materials such as an iron alloy (bearing steel or the like), an aluminum alloy, and a copper alloy.

Regarding the hub unit bearing 1, an axially inner side is the right side in FIG. 1 that is the center side of the vehicle in a width direction in a state of being assembled in the vehicle, and an axially outer side is the left side in FIG. 1 that is the outer side of the vehicle in the width direction in a state of being assembled in the vehicle.

The hub unit bearing 1 of the present example includes an outer ring 2, a hub 3, and a plurality of rolling elements 4a and 4b.

The outer ring 2 is made of a hard metal such as medium carbon steel and has double-row outer ring trajectories 5a and 5b on the inner circumferential surface. In the present example, each of the outer ring trajectories 5a and 5b is an angular type and has substantially a quarter-circular arc-shaped cross section.

Moreover, the outer ring 2 has a stationary flange 6 protruding toward the radially outer side in the axially intermediate portion. The stationary flange 6 is a part used for supporting and fixing the outer ring 2 to a knuckle of a suspension device.

The hub 3 has double-row inner ring trajectories 7a and 7b on the outer circumferential surface. In the present example, each of the inner ring trajectories 7a and 7b is an angular type and has substantially a quarter-circular arc-shaped cross section.

Moreover, the hub 3 has a rotating flange 8 protruding toward the radially outer side in a part positioned on the axially outer side from the outer ring 2. The rotating flange 8 is a part for coupling and fixing a wheel and a braking rotor constituting a wheel assembly.

In the present example, the hub 3 is formed by combining a hub ring 9 and the inner ring 10.

The hub ring 9 is made of a hard metal such as medium carbon steel. The inner ring trajectory 7b on the axially outer side is provided on the outer circumferential surface of the axially intermediate portion of the hub ring 9. In addition, the rotating flange 8 is provided in the axially outer side portion of the hub ring 9. The hub ring 9 has a small diameter stepped portion 11 which has a smaller outer diameter than a part adjacent to the axially outer side and into which the inner ring 10 is externally fitted in the end portion on the axially inner side, and has a stepped surface 12 which faces the axially inner side in the end portion of the small diameter stepped portion 11 on the axially outer side. Since the hub unit bearing 1 of the present example is for a driving wheel, the hub ring 9 has a spline hole 13 for spline engagement of a spline shaft portion constituting a drive shaft member in a radially central portion.

The inner ring 10 is constituted to have substantially a cylindrical shape using a hard metal such as bearing steel. The inner ring trajectory 7a on the axially inner side is provided on the outer circumferential surface of the axially intermediate portion of the inner ring 10.

Specifically, the outer circumferential surface of the inner ring 10 is constituted by connecting a cylindrical large diameter portion 18 provided in the axially inner side part that is one side part in the axial direction, and a cylinder surface-shaped small diameter portion 19 provided in the axially outer side part that is the other side part in the axial direction through the inner ring trajectory 7a on the axially inner side that is a connection surface portion.

In the present example, the inner circumferential surface of the inner ring 10 has an inclined surface portion 39 which is provided in the end portion on the axially inner side that is one side in the axial direction and of which the inner diameter increases as it goes toward the axially inner side, and a cylinder surface portion 40 which is provided in the axially intermediate portion and the end portion on the axially outer side that is the other side in the axial direction. In the present example, the inclined surface portion 39 has substantially a quarter-circular arc-shaped cross section. According to an example, the inclined surface portion can also be constituted as a conical surface having a linear busbar shape.

In the present example, the end surfaces of the inner ring 10 on both sides in the axial direction are constituted of flat surfaces orthogonal to the axial direction.

The entire surface of the inner ring 10 is constituted as a finishing-processed surface subjected to finishing processing such as cutting processing or grinding processing.

The hub 3 is formed by externally fitting and fixing the inner ring 10 to the small diameter stepped portion 11 of the hub ring 9 and causing the end surface of the inner ring 10 on the axially outer side to abut the stepped surface 12 of the hub ring 9.

The hub unit bearing can also be applied to hub unit bearings in which the end portion of a hub ring on the axially inner side is provided with a caulking portion pressing the axially inner side surface of the inner ring, hub unit bearings in which an inner ring trajectory on the axially outer side is provided on the outer circumferential surface of another inner ring externally fitted to the hub ring, and hub unit bearings for a driven wheel having no spline hole in the radially central portion.

The rolling elements 4a and 4b are made of an iron alloy such as bearing steel or made of ceramic, and a plurality of rolling elements are disposed in each of parts between the double-row outer ring trajectories 5a and 5b and between the double-row inner ring trajectories 7a and 7b. In the present example, the rolling elements 4a and 4b are constituted of balls, and a back-to-back-type contact corner and a preload are applied to the rolling elements 4a and 4b in each row.

In the present example, pitch circle diameters of the rolling elements 4a in an axially outer side row and pitch circle diameters of the rolling elements 4b in an axially inner side row are the same as each other. However, the hub unit bearing can also be applied to different-diameter PCD-type hub unit bearings in which the pitch circle diameters of the rolling elements in the axially inner side row and the pitch circle diameters of the rolling elements in the axially outer side row are different from each other.

In the hub unit bearing 1 of the present example, openings of a rolling element installation space 14 on both sides in the axial direction present between the inner circumferential surface of the outer ring 2 and the outer circumferential surface of the hub 3 are blocked by sealing devices 15a and 15b, respectively. Accordingly, it is possible to prevent intrusion of foreign matter such as muddy water into the rolling element installation space 14 from the outside and leakage of lubrication grease enclosed in the rolling element installation space 14 to the outside through the openings of the rolling element installation space 14 on both sides in the axial direction.

In the shown example, the sealing device 15a on the axially inner side is provided with a seal ring 16 internally fitted on the inner circumferential surface of the end portion of the outer ring 2 on the axially inner side, and a slinger 17 externally fitted to the large diameter portion 18 of the inner ring 10, and is constituted of a combination seal ring in which tip portions of a plurality of seal lips constituting the seal ring 16 are brought into sliding contact with a surface of the slinger 17. That is, the large diameter portion 18 of the inner ring 10 is used as a fitting portion for externally fitting the slinger 17.

Next, a method for manufacturing the inner ring (bearing element) 10 in the present example will be described using FIGS. 3 to 7.

In the following description related to the present example, unless otherwise specified, the axial direction refers to the axial direction of a processing subject. One side in the axial direction is the upward side in FIGS. 3 to 7, and the other side in the axial direction is the downward side in FIGS. 3 to 7. In FIGS. 3 to 7, the axial direction of each of the shown members coincides with an upward-downward direction. However, the upward-downward direction in FIGS. 3 to 7 does not always coincide with the upward-downward direction (vertical direction) at the time of processing. That is, the upward-downward direction in FIGS. 3 to 7 can coincide with a horizontal direction or can coincide with a direction inclined with respect to both the upward-downward direction (vertical direction) and the horizontal direction.

The method for manufacturing the inner ring 10 in the present example includes a main step of performing a plurality of stages of plastic processing with respect to a columnar raw material 20 as shown in FIG. 3(a) to obtain a tubular member 21 as shown in FIG. 3(d), and a finishing step of performing finishing processing such as cutting processing or grinding processing with respect to the tubular member 21 to obtain a final shape of the inner ring 10 by the manufacturing method of the aspect.

The plastic processing in the main step is hot forging. For this reason, an oxide film (black skin) is formed on a surface of the tubular member 21 after the main step. If such an oxide film remains on a surface of the completed inner ring 10, it is difficult to secure shape precision and surface roughness precision required of the inner ring 10. For this reason, as indicated by the two-dot dashed line in FIG. 2, there is a need for the tubular member 21 to secure an machining allowance for removal in the finishing step. Therefore, the tubular member 21 has a tube shape of which the entire outline is larger than that of the inner ring 10 by the amount corresponding to the machining allowance.

That is, the outer circumferential surface of the tubular member 21 has a cylinder surface-shaped large diameter portion 22 provided on one side in the axial direction, a cylinder surface-shaped small diameter portion 23 provided on the other side in the axial direction, and a connection surface portion (transition portion) 24 connecting the large diameter portion 22 and the small diameter portion 23. The large diameter portion 22 has a larger outer diameter than the large diameter portion 18 of the inner ring 10 by the amount corresponding to the machining allowance. The small diameter portion 23 has a larger outer diameter than the small diameter portion 19 of the inner ring 10 by the amount corresponding to the machining allowance. The connection surface portion 24 has substantially a quarter-circular arc-shaped cross section and has a larger outer diameter than the inner ring trajectory 7a of the inner ring 10 by the amount corresponding to the machining allowance.

The inner circumferential surface of the tubular member 21 has an inclined surface portion (curved surface portion) 41 which is provided in the end portion on one side in the axial direction and of which the inner diameter increases as it goes toward the axially inner side, and a cylinder surface portion 42 which is provided in the axially intermediate portion and the end portion on the other side in the axial direction. The inclined surface portion 41 has a circular arc-shaped cross section similarly to the inclined surface portion 39 of the inner ring 10 and has a smaller inner diameter than the inclined surface portion 39 by the amount corresponding to the machining allowance. The cylinder surface portion 42 has a smaller inner diameter than the cylinder surface portion 40 of the inner ring 10 by the amount corresponding to the machining allowance.

The end surfaces of the tubular member 21 on both sides in the axial direction are constituted of flat surfaces orthogonal to the axial direction. The end surface of the tubular member 21 on one side in the axial direction is positioned on one side in the axial direction from the end surface of the inner ring 10 on one side in the axial direction by the amount corresponding to the machining allowance, and the end surface of the tubular member 21 on the other side in the axial direction is positioned on the other side in the axial direction from the end surface of the inner ring 10 on the other side in the axial direction by the amount corresponding to the machining allowance.

The thickness of the machining allowance is not particularly limited, but there is a need to have at least a thickness sufficient to be able to remove the oxide film, that is, a thickness equal to or larger than that of the oxide film. When it is assumed that the thickness of the oxide film is 0.2 mm to 0.3 mm, the thickness of the machining allowance can be set to 0.3 mm to 1.0 mm, for example, and can be preferably set to 0.3 mm to 0.5 mm. The foregoing numerical values are merely examples, and it is not limited thereto.

The main step includes an upsetting step, a forming step, and a punching step.

In the upsetting step, the columnar raw material 20 is crushed in the axial direction to obtain a disk-shaped material 25 having an axial dimension smaller than the axial dimension of the raw material 20 and an outer diameter larger than the outer diameter of the raw material 20 as shown in FIG. 3(a).

In the present example, the raw material 20 is obtained by cutting a long metal bar material to a predetermined length.

The outer circumferential surface of the disk-shaped material 25 has substantially a circular arc-shaped cross section (busbar shape) in which the outer diameter of an axially central portion is larger than the outer diameters of the end portions on both sides in the axial direction. In the present example, the outer diameter of the disk-shaped material 25, more specifically, the outer diameter of the axially central portion that is the largest diameter portion of the disk-shaped material 25 is the same or approximately the same as the outer diameter of the small diameter portion 23 of the tubular member 21. In the disk-shaped material 25, outer diameters of the end portions on both sides in the axial direction that are the smallest diameter portions are slightly smaller than the outer diameter of the small diameter portion 23 of the tubular member 21.

In the forming step, plastic processing is performed with respect to the disk-shaped material 25 to obtain an intermediate material 32 including an intermediate tube portion 30 having the large diameter portion 22, the small diameter portion 23, and the connection surface portion 24 on the outer circumferential surface and a partition wall portion 31 blocking the end portion opening of the intermediate tube portion 30 on the other side in the axial direction.

In the present example, the forming step includes a preforming step and a post-forming step.

In the preforming step, rearward extrusion processing that is plastic processing is performed with respect to the disk-shaped material 25 to obtain a cup-shaped preliminary intermediate material 28 including a preliminary intermediate tube portion 26 having an axial dimension larger than the axial dimension of the tubular member 21, and a partition wall portion 27 blocking the end portion opening of the preliminary intermediate tube portion 26 on the other side in the axial direction as shown in FIG. 3(b).

As long as the axial dimension of the preliminary intermediate tube portion is larger than the axial dimension of the tubular member and the partition wall portion blocks the end portion opening of the preliminary intermediate tube portion on the other side in the axial direction, the shapes of the preliminary intermediate tube portion and the partition wall portion are not particularly limited.

In the present example, in the preforming step, the outer diameter of one side part of the preliminary intermediate tube portion 26 in the axial direction is set to be slightly smaller than the outer diameter of the large diameter portion 22 of the tubular member 21, and the outer diameter of the other side part of the preliminary intermediate tube portion 26 in the axial direction is set to be slightly smaller than the outer diameter of the small diameter portion 23 of the tubular member 21. More specifically, the outer diameter of one side part of the preliminary intermediate tube portion 26 in the axial direction is set to be slightly smaller than the inner diameter of a large diameter portion 35a1 of a dice 35a (=the outer diameter of the large diameter portion 22 of the tubular member 21) used in the post-forming step (refer to FIG. 7(a)) by the amount corresponding to an insertion clearance with respect to the large diameter portion 35a1. In addition, the outer diameter of the other side part of the preliminary intermediate tube portion 26 in the axial direction is set to be slightly smaller than the inner diameter of a small diameter portion 35a2 of the dice 35a (=the outer diameter of the small diameter portion 23 of the tubular member 21) used in the post-forming step (refer to FIG. 7(a)) by the amount corresponding to an insertion clearance with respect to the small diameter portion 35a2.

In the present example, the outer circumferential surface of the preliminary intermediate tube portion 26 includes a cylinder surface-shaped large diameter portion 22a provided in one side part in the axial direction, a cylinder surface-shaped small diameter portion 23a provided on the other side in the axial direction, and a connection surface portion (transition portion) 24a connecting the large diameter portion 22a and the small diameter portion 23a and having substantially a quarter-circular arc-shaped cross section. The large diameter portion 22a has an outer diameter slightly smaller than the outer diameter of the large diameter portion 22 of the tubular member 21 by the amount corresponding to the insertion clearance with respect to the large diameter portion 35a1 of the dice 35a and has an axial dimension larger than the axial dimension of the large diameter portion 22 of the tubular member 21. The small diameter portion 23a has an outer diameter slightly smaller than the outer diameter of the small diameter portion 23 of the tubular member 21 by the amount corresponding to the insertion clearance with respect to the small diameter portion 35a2 of the dice 35a and has an axial dimension smaller than the axial dimension of the small diameter portion 23 of the tubular member 21. The connection surface portion 24a has a radius of curvature larger than the radius of curvature of the connection surface portion 24 of the tubular member 21.

In the present example, the inner circumferential surface of the preliminary intermediate tube portion 26 is constituted of a substantially conical tube surface of which the inner diameter increases as it goes from the other side in the axial direction toward one side in the axial direction.

The end surface of the preliminary intermediate tube portion 26 on one side in the axial direction has substantially a circular arc-shaped cross section in which one side in the axial direction protrudes. That is, the radially inner side part on the end surface of the preliminary intermediate tube portion 26 on one side in the axial direction is constituted of a convex surface increasingly inclined in a direction toward the other side in the axial direction as it goes toward the radially inner side, and the radially outer side part on the end surface of the preliminary intermediate tube portion 26 on one side in the axial direction is constituted of a convex surface increasingly inclined in a direction toward the other side in the axial direction as it goes toward the radially outer side.

In the present example, the opening width (inner diameter) of the end portion of the preliminary intermediate tube portion 26 on one side in the axial direction is larger than the opening width (inner diameter) of the end portion of the tubular member 21 on one side in the axial direction.

In the present example, a side surface of the partition wall portion 27 on one side in the axial direction is constituted of a substantially conical surface increasingly inclined in a direction toward the other side in the axial direction as it goes toward the radially inner side.

In the present example, the end surface of the preliminary intermediate material 28 on the other side in the axial direction constituted of the end surface of the preliminary intermediate tube portion 26 on the other side in the axial direction and a side surface of the partition wall portion 27 on the other side in the axial direction is constituted of a single flat surface orthogonal to the axial direction.

Additionally and/or alternatively, a recessed portion recessed in the axial direction can also be provided in the radially central portion on the end surface of the preliminary intermediate material on the other side in the axial direction. If a recessed portion is provided, work of separating the end surface of the preliminary intermediate material on the other side in the axial direction from the forming die can be facilitated after the preliminary intermediate material is formed.

In the main step, the material constituting the partition wall portion 27 is finally punched out and does not remain in the tubular member 21. For this reason, in the present example, the material thickness of the partition wall portion 27 in the axial direction is reduced as much as possible. Specifically, it is made smaller than the material thickness of the preliminary intermediate tube portion 26 in the radial direction. Accordingly, the yield rate is improved.

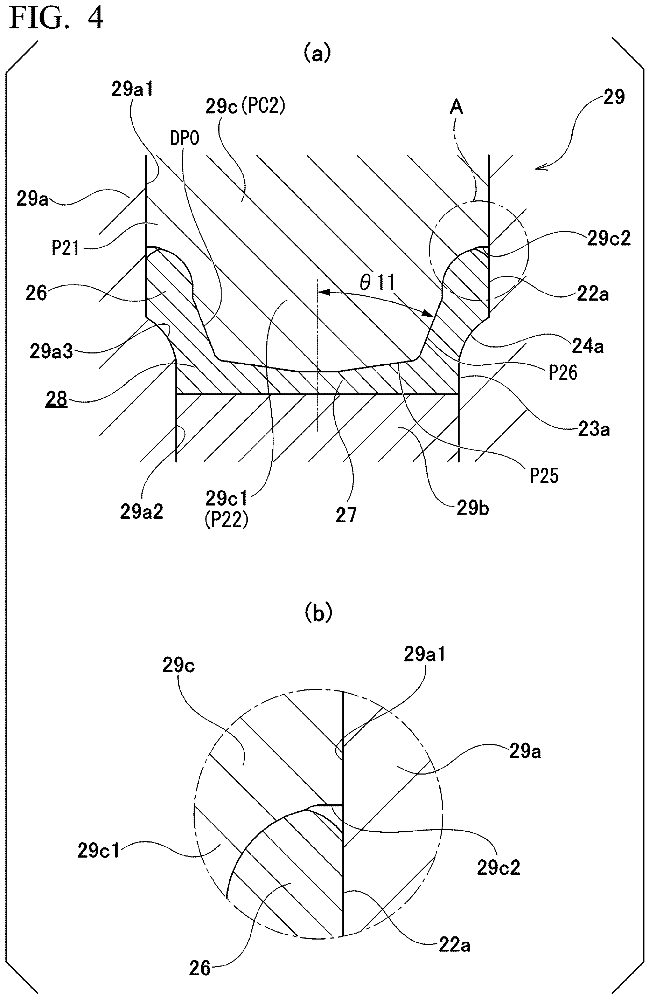

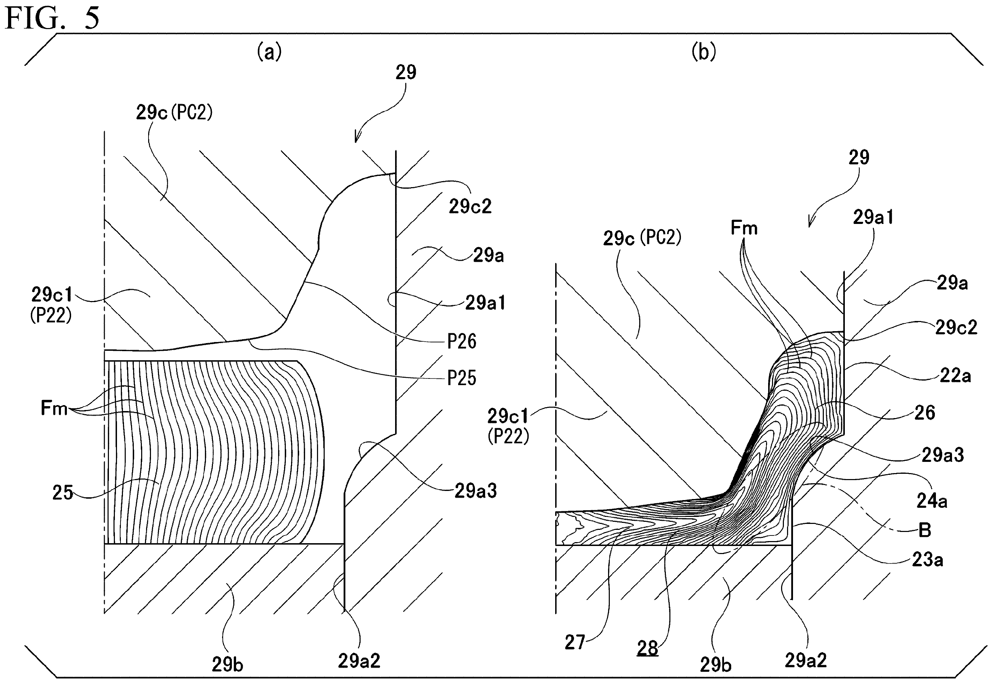

The preforming step is performed using a press processing apparatus 29 as shown in FIGS. 4 and 5. The press processing apparatus 29 includes a dice 29a, a dice pin 29b, and a punch 29c which each serve as a forming die.

The dice 29a includes an inner circumferential surface having a shape along the outer circumferential surface of the preliminary intermediate material 28 to be obtained, that is, the outer circumferential surface of the preliminary intermediate tube portion 26. Specifically, the inner circumferential surface of the dice 29a has a stepped cylinder shape formed by connecting a large diameter portion 29a1 provided on one side in the axial direction and a small diameter portion 29a2 provided on the other side in the axial direction through a curved surface portion 29a3. The large diameter portion 29a1 has a shape along the large diameter portion 22a of the preliminary intermediate tube portion 26, the small diameter portion 29a2 has a shape along the small diameter portion 23a of the preliminary intermediate tube portion 26, and the curved surface portion 29a3 has a shape along the connection surface portion 24a of the preliminary intermediate tube portion 26.

The dice pin 29b is disposed on the inner diameter side of the small diameter portion 29a2 of the dice 29a without looseness in the radial direction. The end surface on one side in the axial direction that is a tip surface of the dice pin 29b has a shape along the end surface of the preliminary intermediate material 28 on the other side in the axial direction.

The punch 29c is supported such that the press processing apparatus 29 can move in the axial direction with respect to a support stand (not shown).

The punch 29c has a protrusion portion (projection portion) 29c1 in a central portion on the tip surface (end surface on the other side in the axial direction). The outer circumferential surface of the protrusion portion 29c1 has a shape along the radially inner side part on the end surface of the preliminary intermediate tube portion 26 on one side in the axial direction and a part positioned on one side in the axial direction from the partition wall portion 27 on the inner circumferential surface of the preliminary intermediate tube portion 26. The end surface on the other side in the axial direction that is a tip surface of the protrusion portion 29c1 has a shape along the side surface of the partition wall portion 27 on one side in the axial direction.

Moreover, the punch 29c has an annular surface portion 29c2 bent from the end portion on the outer circumferential surface of the protrusion portion 29c1 on one side in the axial direction to the radially outer side. In the present example, the annular surface portion 29c2 is constituted of a flat surface orthogonal to the center axis of the punch 29.

When rearward extrusion processing is performed with respect to the disk-shaped material 25 using the press processing apparatus 29 to obtain the preliminary intermediate material 28, first, as shown in FIG. 5(a), the disk-shaped material 25 is placed on the end surface of the dice pin 29b on one side in the axial direction.

Next, the punch 29c is moved to the other side in the axial direction, and the radially central portion of the disk-shaped material 25 is pressed by the end surface of the protrusion portion 29c1 of the punch 29c on the other side in the axial direction. Accordingly, as shown in FIGS. 5(a), 5(b), and 4(a), while the central portion of the disk-shaped material 25 is crushed in the axial direction between the end surface of the protrusion portion 29c1 on the other side in the axial direction and the end surface of the dice pin 29b on one side in the axial direction, the material of the radially outer side part of the disk-shaped material 25 is moved to a part between the outer circumferential surface of the protrusion portion 29c1 and the inner circumferential surface of the dice 29a to obtain the preliminary intermediate material 28.

In the present example, in the preforming step, at least a radial part on the end surface of the preliminary intermediate tube portion 26 on one side in the axial direction is prevented from coming into contact with the forming die for performing the rearward extrusion processing.

More specifically, in the present example, as shown in FIG. 4(b), the radially outer side part on the end surface of the preliminary intermediate tube portion 26 on one side in the axial direction is prevented from coming into contact with the annular surface portion 29c2 of the punch 29c. For this reason, in the present example, compared to when the entire end surface of the preliminary intermediate tube portion 26 on one side in the axial direction is brought into contact with the forming die for performing the rearward extrusion processing, the processing load during the preforming step can be reduced. As a result, durability of the dice 29a, the dice pin 29b, and the punch 29c can be secured, and manufacturing costs of the inner ring 10 can be reduced.

In the preforming step, the entire end surface of the preliminary intermediate tube portion on one side in the axial direction is prevented from coming into contact with or can be brought into contact with the forming die.

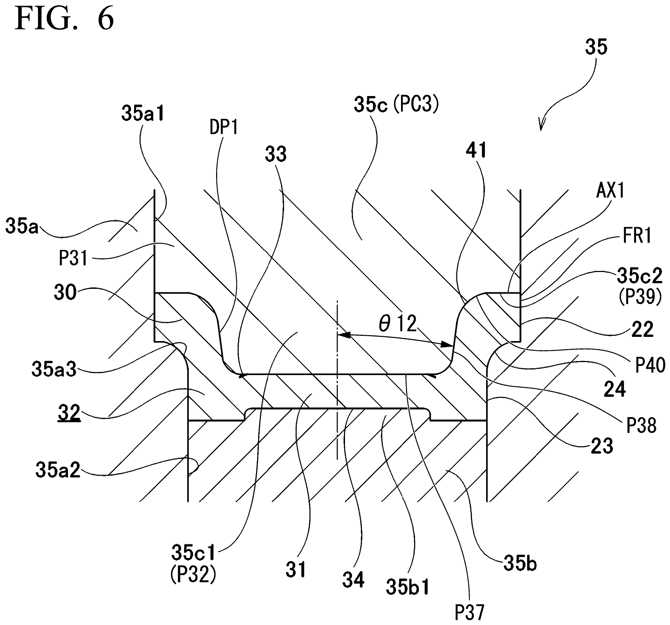

In the preforming step, as shown in FIG. 6, the preliminary intermediate material 28 is crushed in the axial direction on the inner side on the inner circumferential surface of the dice 35a having a shape along the outer circumferential surface of the intermediate material 32 to obtain the cup-shaped intermediate material 32 having an axial dimension equivalent to the axial dimension of the tubular member 21 as shown in FIG. 3(c).

The intermediate material 32 includes the intermediate tube portion 30, and the partition wall portion 31 blocking the end portion opening of the intermediate tube portion 30 on the other side in the axial direction.

The intermediate tube portion 30 has an axial dimension equivalent to the axial dimension of the tubular member 21. The intermediate tube portion 30 has the same outer circumferential surface shape as the shape of the outer circumferential surface of the tubular member 21. That is, the outer circumferential surface of the intermediate tube portion 30 has the large diameter portion 22, the connection surface portion 24, and the small diameter portion 23 in order from one side in the axial direction.

The end surfaces of the intermediate tube portion 30 on both sides in the axial direction have the same shape as the end surfaces of the tubular member 21 on both sides in the axial direction, that is, a flat surface shape orthogonal to the axial direction.

The end portion on the inner circumferential surface of the intermediate tube portion 30 on one side in the axial direction has the same shape as the end portion on the inner circumferential surface of the tubular member 21 on one side in the axial direction. That is, the inner circumferential surface of the intermediate tube portion 30 has the inclined surface portion 41 in the end portion on one side in the axial direction. A part positioned between the partition wall portion 31 and the inclined surface portion 41 in the axial direction on the inner circumferential surface of the intermediate tube portion 30 is constituted of a tapered surface slightly inclined in a direction toward the radially outer side as it goes toward one side in the axial direction. The inner diameter of the part is smaller than the inner diameter of the part positioned on one side in the axial direction from the partition wall portion 27 on the inner circumferential surface of the preliminary intermediate tube portion 26, and is smaller than the inner diameter of the cylinder surface portion 42 of the tubular member 21.

The material thickness of the partition wall portion 31 in the axial direction is larger than the material thickness of the partition wall portion 27 of the preliminary intermediate material 28 in the axial direction. In the present example, a side surface of the partition wall portion 31 on one side in the axial direction is constituted of a flat surface orthogonal to the axial direction. A side surface of the partition wall portion 31 on the other side in the axial direction has a recessed portion 34 recessed in the axial direction in the radially central portion. A part positioned on the radially outer side from the recessed portion 34 on the side surface of the partition wall portion 31 on the other side in the axial direction is constituted of a flat surface present within the same virtual flat surface as the end surface of the intermediate tube portion 30 on the other side in the axial direction.

That is, in the present example, the end surface of the intermediate material 32 on the other side in the axial direction, which is constituted of the end surface of the intermediate tube portion 30 on the other side in the axial direction and the side surface of the partition wall portion 31 on the other side in the axial direction, has the recessed portion 34 in the radially central portion, and a part positioned on the radially outer side from the recessed portion 34 is constituted of a single flat surface orthogonal to the axial direction. In the present example, since such a recessed portion 34 is provided, work of separating the end surface of the intermediate material 32 on the other side in the axial direction from the forming die can be facilitated after the intermediate material 32 is formed. Alternatively, provision of a recessed portion on the end surface of the intermediate material on the other side in the axial direction can be omitted.

In the present example, the partition wall portion 31 has a toric covering scratch 33, which is generated by processing in the post-forming step, in one side part of a radially intermediate portion in the axial direction. The diameter of a circumscribed circle of the covering scratch 33 is smaller than the inner diameter of the tubular member 21.

The post-forming step is performed using a press processing apparatus 35 as shown in FIGS. 6 and 7. The press processing apparatus 35 includes the dice 35a, a dice pin 35b, and a punch 35c which each serve as a forming die.

The dice 35a includes an inner circumferential surface having a shape along the outer circumferential surface of the intermediate material 32, that is, the outer circumferential surface of the intermediate tube portion 30. Specifically, the inner circumferential surface of the dice 35a has a stepped cylinder shape formed by connecting the large diameter portion 35a1 provided on one side in the axial direction and the small diameter portion 35a2 provided on the other side in the axial direction through a curved surface portion 35a3. The large diameter portion 35a1 has a shape along the large diameter portion 22 of the intermediate tube portion 30, the small diameter portion 35a2 has a shape along the small diameter portion 23 of the intermediate tube portion 30, and the curved surface portion 35a3 has a shape along the connection surface portion 24 of the intermediate tube portion 30.

The dice pin 35b is disposed on the inner diameter side of the small diameter portion 35a2 of the dice 35a without looseness in the radial direction. The end surface on one side in the axial direction that is a tip surface of the dice pin 35b has a shape along the end surface of the intermediate material 32 on the other side in the axial direction. Specifically, the end surface of the dice pin 35b on one side in the axial direction has a protrusion portion 35b1 having a shape of the outer surface along an inner surface shape of the recessed portion 34 of the intermediate material 32 in the radially central portion. The radially outer side part that is a part positioned on the radially outer side from the protrusion portion 35b1 on the end surface of the dice pin 35b on one side in the axial direction is constituted of a circular ring-shaped flat surface orthogonal to the center axis of the dice pin 35b.

The punch 35c is supported such that the press processing apparatus 35 can move in the axial direction with respect to a support stand (not shown).

The punch 35c has a protrusion portion 35c1 in a central portion on the tip surface (end surface on the other side in the axial direction). The outer circumferential surface of the protrusion portion 35c1 has a shape along a part positioned on one side in the axial direction from the partition wall portion 31 on the inner circumferential surface of the intermediate tube portion 30. The end surface on the other side in the axial direction that is a tip surface of the protrusion portion 35c1 has a shape along the side surface of the partition wall portion 31 on one side in the axial direction.

Moreover, the punch 35c has an annular surface portion 35c2 bent from the end portion on the outer circumferential surface of the protrusion portion 35c1 on one side in the axial direction to the radially outer side. The annular surface portion 35c2 is constituted of a flat surface orthogonal to the center axis of the punch 29.

When processing is performed with respect to the preliminary intermediate material 28 using the press processing apparatus 35 to obtain the intermediate material 32, first, as shown in FIG. 7(a), the preliminary intermediate material 28 is placed on the end surface of the dice pin 35b on one side in the axial direction, more specifically, the end surface of the protrusion portion 35b1 on one side in the axial direction. Along with this, the large diameter portion 22a of the preliminary intermediate material 28 is internally fitted into the large diameter portion 35a1 of the dice 35a without looseness in the radial direction, and the small diameter portion 23a of the preliminary intermediate material 28 is internally fitted into the small diameter portion 35a2 of the dice 35a without looseness in the radial direction.

Next, the punch 35c is moved to the other side in the axial direction, and the preliminary intermediate tube portion 26 of the preliminary intermediate material 28 is pressed by the annular surface portion 35c2 of the punch 35c from one side in the axial direction. Moreover, from this state, the punch 35c is moved to the other side in the axial direction until the axial distance between the annular surface portion 35c2 of the punch 35c and the radially outer side part on the end surface of the dice pin 35b on one side in the axial direction becomes the same size as the axial dimension of the tubular member 21.

Accordingly, as shown in FIGS. 7(a), 7(b), and 6, while the preliminary intermediate tube portion 26 is crushed in the axial direction between the annular surface portion 35c2 of the punch 35c and the end surface of the dice pin 35b on one side in the axial direction, the materials of the preliminary intermediate tube portion 26 and the partition wall portion 27 are moved in a direction in which a gap inside a space surrounded by the dice 35a, the dice pin 35b, and the punch 35c, that is, a formation space of the intermediate material 32 is filled. Accordingly, the intermediate material 32 is obtained.

In the post-forming step, the annular surface portion 35c2 of the punch 35c becomes a forming surface for forming the end surface of the intermediate tube portion 30 on one side in the axial direction. In the present example, from an early stage of processing in the post-forming step, the end portion of the preliminary intermediate tube portion 26 on one side in the axial direction abuts the annular surface portion 35c2 of the punch 35c. That is, from an early stage of processing in the post-forming step, the material for forming the end surface of the intermediate tube portion 30 on one side in the axial direction is present in the vicinity of the annular surface portion 35c2 of the punch 35c.

For this reason, in the present example, even if the processing load is not excessively increased in the post-forming step, the material can reliably reach the radially outer end portion of the end portion on one side in the axial direction in the formation space of the intermediate material 32. As a result, the radially outer end portion on the end surface of the intermediate tube portion 30 on one side in the axial direction can be prevented from having an underfill shape as indicated by the dashed line α in FIG. 23, and the radially outer end portion on the end surface can have substantially a right-angled cross-sectional shape.

In the present example, at an ending stage of processing in the post-forming step, the end surface of the intermediate material 32 on the other side in the axial direction and the end surface of the dice pin 35b on one side in the axial direction are not simply in contact with each other as flat surfaces, but projection/recess engagement is established therebetween based on the presence of the recessed portion 34 and the protrusion portion 35b1. For this reason, an adhesive force between the end surface of the intermediate material 32 on the other side in the axial direction and the end surface of the dice pin 35b on one side in the axial direction can be mitigated, and work of separating the end surface of the intermediate material 32 on the other side in the axial direction from the end surface of the dice pin 35b on one side in the axial direction can be facilitated after the intermediate material 32 is formed.

In the punching step, the tubular member 21 shown in FIG. 3(d) is obtained by punching out the radially inner side part of the intermediate tube portion 30 and the partition wall portion 31 constituting the intermediate material 32 in the axial direction.

The shape of the tubular member 21 is the same shape as the intermediate tube portion 30 excluding the radially inner side part. For this reason, in the present example, the cross-sectional shape of the radially outer end portion on the end surface of the tubular member 21 on one side in the axial direction after the punching step can also have substantially a right-angled cross section. That is, the radially outer end portion on the end surface of the tubular member 21 on one side in the axial direction can be prevented from having an underfill shape as indicated by the dashed line α in FIG. 23.

In the present example, in the punching step, since the partition wall portion 31 having the covering scratch 33 and the recessed portion 34 is removed, the covering scratch 33 and the recessed portion 34 do not remain in the tubular member 21.

In the finishing step, finishing processing such as cutting processing or grinding processing is performed with respect to the entire surface of the tubular member 21. Accordingly, the oxide film present on the entire surface of the tubular member 21 is removed and the shape precision and the surface roughness precision required for each spot on the entire surface of the tubular member 21 are secured so that the inner ring 10 is obtained.

In the present example, in the preforming step, the radially outer side part on the end surface of the preliminary intermediate tube portion 26 on one side in the axial direction is prevented from coming into contact with the annular surface portion 29c2 of the punch 29c. For this reason, there is no need to excessively increase the processing load in the preforming step. In addition, in the post-forming step, from an early stage of processing, the material for forming the end surface of the intermediate tube portion 30 on one side in the axial direction is present in the vicinity of the annular surface portion 35c2 of the punch 35c. For this reason, there is no need to excessively increase the processing load in the post-forming step.

That is, according to the manufacturing method of the present example, even when the machining allowance sufficient to be able to remove the oxide film by finishing processing is secured in the radially outer end portion on the end surface of the tubular member 21 on one side in the axial direction, there is no need to increase the processing load in the preforming step and the post-forming step. For this reason, the load applied to the forming die used in the preforming step and the post-forming step can be kept low, and sufficient durability of the forming die can be secured. In addition, since there is no need to excessively increase the volume of the raw material 20 and entirely increase the thickness of the machining allowance provided in the tubular member 21, the yield rate can be improved. As a result, the tubular member 21 can be manufactured at low cost. Consequently, manufacturing costs of the inner ring 10 can be reduced.

In the present example, since the covering scratch 33 does not remain in the tubular member 21, the covering scratch 33 also does not remain in the inner ring 10 which can be obtained by performing finishing processing with respect to the tubular member 21. Therefore, it is easy to secure the quality of the inner ring 10.

In the present example, as shown in FIG. 2, a metal flow Fm inside the inner ring 10 obtained in the finishing step has an inclined portion Tp increasingly inclined in a direction toward the radially outer side as it goes from the other side in the axial direction toward one side in the axial direction in the axially intermediate portion of the inner ring 10. The metal flow Fm inside the inner ring 10 is denser in the inclined portion Tp than in parts present around the inclined portion Tp.

The reason for this is that, in the preforming step of the method for manufacturing the tubular member 21, as shown in FIGS. 5(a) and 5(b), rearward extrusion processing is performed with respect to the disk-shaped material 25 to form the preliminary intermediate tube portion 26 having a larger axial dimension than the tubular member 21. That is, in the present example, due to an influence of the rearward extrusion processing at this time, the metal flow Fm which is increasingly inclined in a direction toward the radially outer side from the other side in the axial direction toward one side in the axial direction and is denser than surrounding parts is formed in a part of half the preliminary intermediate tube portion 26 on the other side in the axial direction (part B in FIGS. 5(b) and 7(a)). Further, the metal flow Fm in this part is slightly modified in the post-forming step as shown in the part C of FIG. 7(b) and is partially removed in the punching step and the finishing step, thereby forming the inclined portion Tp.

That is, if the inclined portion Tp is present in the metal flow Fm inside the inner ring 10, it is possible to estimate that the inner ring 10 has been obtained by the manufacturing method of the present example.

### [Second example]

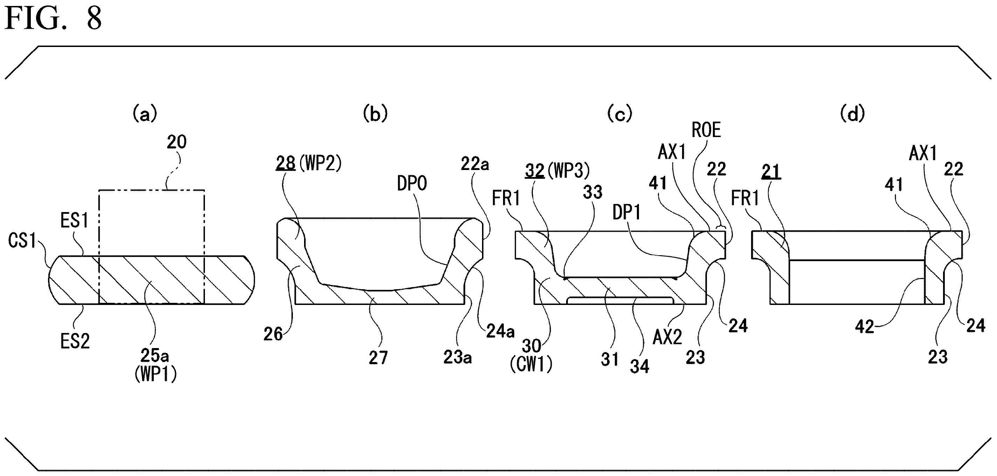

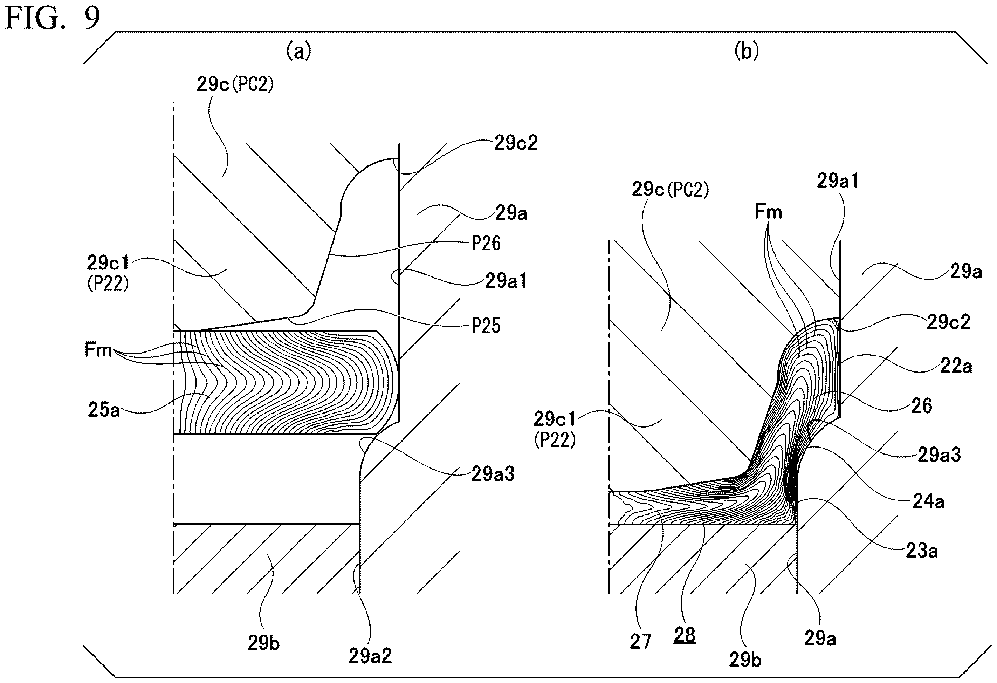

A second example will be described using FIGS. 8 and 9.

In the method for manufacturing the inner ring 10 of the present example (refer to FIG. 1), the post-forming step and the punching step in the main step and the finishing step are similar to the post-forming step and the punching step in the main step and the finishing step of the first example. Hereinafter, in the method for manufacturing the inner ring 10 of the present example, the upsetting step and the preforming step in the main step will be described.

In the upsetting step, as shown in FIG. 8(a), when a disk-shaped material 25a is obtained from the columnar raw material 20, the crushing amount of the raw material 20 is further increased than that of the first example. Accordingly, the outer diameter of the disk-shaped material 25a, more specifically, the outer diameter of the axially central portion that is the largest diameter portion of the disk-shaped material 25a is set to be the same as the outer diameter of the large diameter portion 22 of the tubular member 21 (refer to FIG. 8(d)) or set to be slightly smaller than the outer diameter of the large diameter portion 22.

In the preforming step, plastic processing is performed with respect to the disk-shaped material 25a as in the forward/rearward extrusion processing using the press processing apparatus 29 having basically the same structure as the press processing apparatus 29 used in the preforming step of the first example to obtain the preliminary intermediate material 28 including the preliminary intermediate tube portion 26 and the partition wall portion 27 as shown in FIG. 8(b).

At this time, first, as shown in FIG. 9(a), a radially outer end edge portion on the end surface of the disk-shaped material 25a on the other side in the axial direction is engaged with the end portion of the curved surface portion 29a3 of the dice 29a on one side in the axial direction, thereby holding the disk-shaped material 25a on the radially inner side of the large diameter portion 29a1 of the dice 29a.

Next, the punch 29c is moved to the other side in the axial direction, and the radially central portion of the disk-shaped material 25a is pressed by the end surface of the protrusion portion 29c1 of the punch 29c on the other side in the axial direction. Accordingly, as shown in FIGS. 9(a) and 9(b), the material in the central portion of the disk-shaped material 25a is moved to the other side in the axial direction and moved to a part between the outer circumferential surface of the protrusion portion 29c1 and the inner circumferential surface of the dice 29a while being crushed in the axial direction between the end surface of the protrusion portion 29c1 on the other side in the axial direction and the end surface of the dice pin 29b on one side in the axial direction. Along with this, the material of the radially outer side part of the disk-shaped material 25 is moved toward one side in the radial direction between the outer circumferential surface of the protrusion portion 29c1 and the inner circumferential surface of the dice 29a while being crushed in the radial direction between the outer circumferential surface of the protrusion portion 29c1 and the inner circumferential surface of the dice 29a. Accordingly, the preliminary intermediate material 28 is obtained.

In the case of the present example as well, in the preforming step, as shown in FIG. 9(b), the radially outer side part on the end surface of the preliminary intermediate tube portion 26 on one side in the axial direction is prevented from coming into contact with the annular surface portion 29c2 of the punch 29c. For this reason, the processing load during the preforming step can be reduced.

FIGS. 9(a) and 9(b) show the metal flow Fm inside a processing subject (disk-shaped material 25a, preliminary intermediate material 28) before and after the preforming step.

In the case of the present example as well, the metal flow Fm inside the preliminary intermediate material 28 is in a form similar to that of the first example. For this reason, the metal flow Fm inside the completed inner ring 10 is also in a form similar to that of the first example. Other constitutions and operational effects of the second example are similar to those of the first example.

### [Third example]

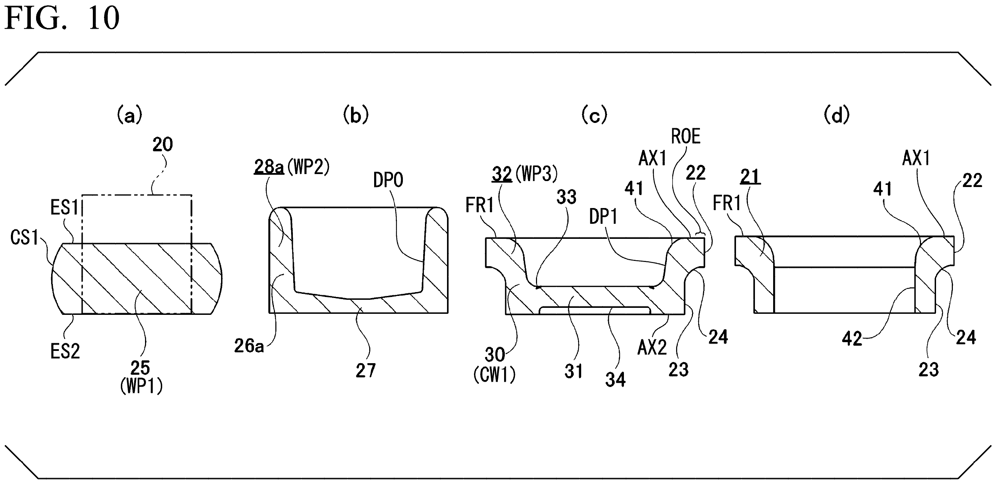

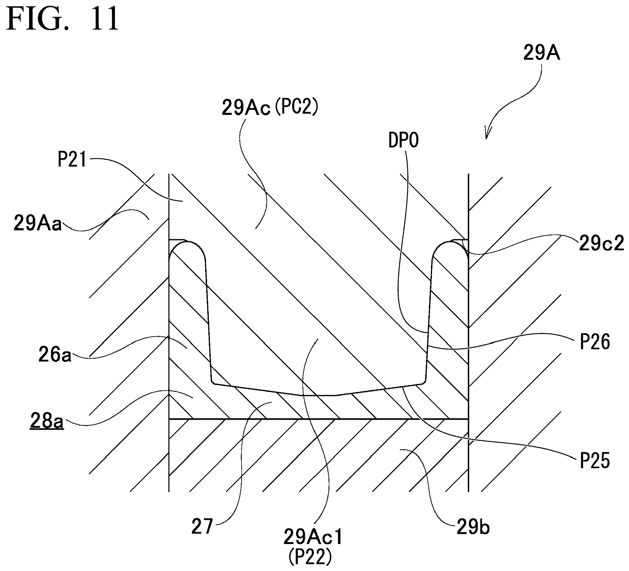

A third example will be described using FIGS. 10 and 11.

In the method for manufacturing the inner ring 10 of the present example (refer to FIG. 1), the upsetting step, the post-forming step, and the punching step in the main step and the finishing step are similar to the upsetting step, the post-forming step, and the punching step in the main step and the finishing step of the first example. Hereinafter, in the method for manufacturing the inner ring 10 of the present example, the preforming step in the main step will be described.

In the present example, in a preliminary intermediate tube portion 26a constituting a preliminary intermediate material 28a and the partition wall portion 27 obtained in the preforming step, the outer circumferential surface of the preliminary intermediate tube portion 26a is constituted of a cylinder surface of which the outer diameter does not change in the axial direction. The inner circumferential surface of the preliminary intermediate tube portion 26a is constituted of a tapered surface of which the inner diameter increases as it goes toward one side in the axial direction and which has a small inclination angle with respect to the axial direction. That is, the preliminary intermediate tube portion 26a has substantially a cylinder shape.

In the present example, the outer diameter of the preliminary intermediate tube portion 26a is the same as the outer diameter of the small diameter portion 23 of the tubular member 21 (refer to FIG. 10(d)) or is slightly smaller than the outer diameter of the small diameter portion 23. That is, the outer diameter of the preliminary intermediate tube portion 26a is the same as the inner diameter of the small diameter portion 35a2 of the dice 35a constituting the press processing apparatus 35 used in the post-forming step (refer to FIG. 6) or is slightly smaller than the inner diameter of the small diameter portion 35a2.

In the present example, as shown in FIG. 11, in a press processing apparatus 29A used in the preforming step, the inner circumferential surface of a dice 29Aa has a cylinder surface shape along the outer circumferential surface of the preliminary intermediate tube portion 26a. The outer circumferential surface of a protrusion portion 29Ac1 of a punch 29Ac has a tapered surface shape along the inner circumferential surface of the preliminary intermediate tube portion 26a. Other constitutions and operational effects of the third example are similar to those of the first example.

### [Fourth example]

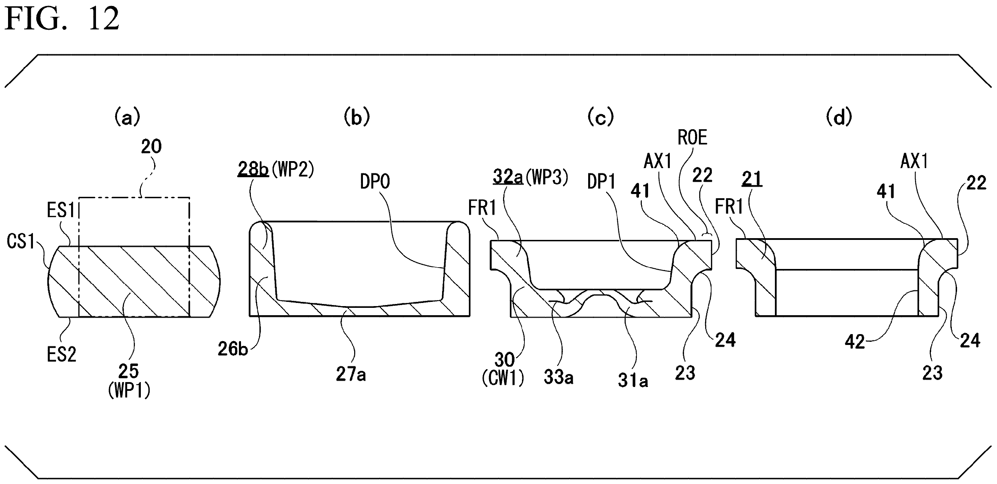

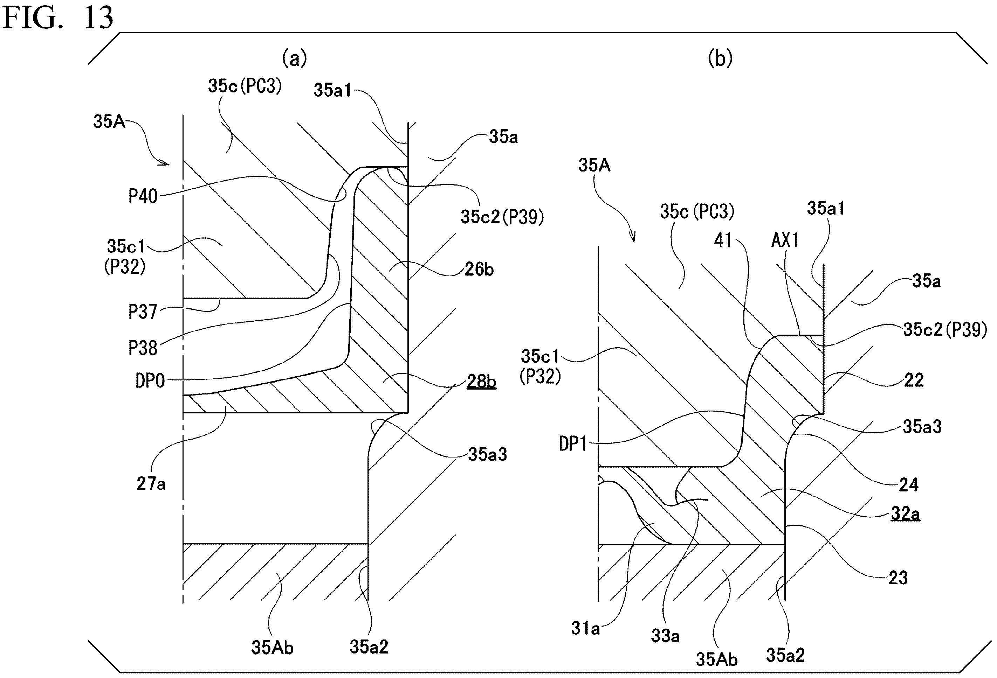

A fourth example will be described using FIGS. 12 and 13.

In the method for manufacturing the inner ring 10 of the present example (refer to FIG. 1), the upsetting step, and the punching step, and the finishing step in the main step are similar to the upsetting step, and the punching step, and the finishing step in the main step of the first example. Hereinafter, in the method for manufacturing the inner ring 10 of the present example, the preforming step and the post-forming step in the main step will be described.

In the present example, as shown in FIG. 12(b), in a preliminary intermediate tube portion 26b constituting a preliminary intermediate material 28b and a partition wall portion 27a obtained in the preforming step, the preliminary intermediate tube portion 26b has substantially a cylinder shape similarly to the third example. That is, the outer circumferential surface of the preliminary intermediate tube portion 26b is constituted of a cylinder surface of which the outer diameter does not change in the axial direction, and the inner circumferential surface of the preliminary intermediate tube portion 26b is constituted of a tapered surface of which the inner diameter increases as it goes toward one side in the axial direction and which has a small inclination angle with respect to the axial direction.

In the present example, the outer diameter of the preliminary intermediate tube portion 26b is the same as the outer diameter of the large diameter portion 22 of the tubular member 21 (refer to FIG. 10(d)) or is slightly smaller than the outer diameter of the large diameter portion 22. That is, the outer diameter of the preliminary intermediate tube portion 26b is the same as the inner diameter of the large diameter portion 35a1 of the dice 35a constituting the press processing apparatus 35 used in the post-forming step (refer to FIGS. 13(a) and 13(b)) or is slightly smaller than the inner diameter of the large diameter portion 35a1.

In the present example, an end surface of a dice pin 35Ab on one side in the axial direction constituting a press processing apparatus 35A used in the post-forming step is constituted of a single flat surface orthogonal to the axial direction as shown in FIGS. 13(a) and 13(b).

In the present example, in the post-forming step, when processing is performed with respect to the preliminary intermediate material 28b using the press processing apparatus 35A to obtain an intermediate material 32a, first, as shown in FIG. 13(a), the radially outer end portion on the end surface of the preliminary intermediate material 28b on the other side in the axial direction is engaged with the end portion of the curved surface portion 29a3 of the dice 29a on one side in the radial direction to hold the preliminary intermediate material 28b on the radially inner side of the large diameter portion 35a1 of the dice 35a.

Next, the punch 35c is moved to the other side in the axial direction, and the preliminary intermediate tube portion 26 of the preliminary intermediate material 28 is pressed by the annular surface portion 35c2 of the punch 35c from one side in the axial direction. Moreover, from this state, the punch 35c is moved to the other side in the axial direction until the axial distance between the annular surface portion 35c2 of the punch 35c and the end surface of the dice pin 35Ab on one side in the axial direction becomes the same size as the axial dimension of the tubular member 21 (refer to FIG. 12(d)).

Accordingly, as shown in FIGS. 13(a) and 13(b), the preliminary intermediate material 28b is plastically deformed and the intermediate material 32a is obtained. In the present example, the obtained intermediate material 32a has a toric covering scratch 33a, which is generated by processing in the post-forming step, in the axially intermediate portion of the radially intermediate portion of a partition wall portion 31a. The diameter of a circumscribed circle of the covering scratch 33a is smaller than the inner diameter of the tubular member 21. In the case of the present example as well, in the punching step, since the partition wall portion 31a having the covering scratch 33a is punched out, the covering scratch 33a does not remain in the obtained tubular member 21. Other constitutions and operational effects of the fourth example are similar to those of the first example or the third example.

### [Fifth example]

A fifth example will be described using FIGS. 14 and 15.

In the method for manufacturing the inner ring 10 of the present example (refer to FIG. 1) includes an upsetting step, a forming step, a punching step, and a removing step.

In the present example, in the upsetting step, similar to the first example, as shown in FIG. 14(a), a columnar raw material 20a is crushed in the axial direction to obtain a disk-shaped material 25b having a smaller axial dimension and a larger outer diameter than a raw material 20a. At this time, the crushing amount of the raw material 20a is further increased than that of the first example. Accordingly, the outer diameter of the disk-shaped material 25b, more specifically, the outer diameter of the axially central portion that is the largest diameter portion of the disk-shaped material 25b is set to be the same as the outer diameter of the large diameter portion 22 of the tubular member 21a or set to be slightly smaller than the outer diameter of the large diameter portion 22.

In the present example, the volume of the raw material 20a is further increased than that of the first example by the amount corresponding to an annular protrusion portion 36 formed in the forming step.

In the forming step, plastic processing is performed with respect to the disk-shaped material 25b as in the forward/rearward extrusion processing to obtain an intermediate material 32b including an intermediate tube portion 30a and a partition wall portion 31b blocking the end portion opening of the intermediate tube portion 30a on the other side in the axial direction as shown in FIG. 14(b).

The intermediate tube portion 30a differs from the intermediate tube portion 30a of the first example (refer to FIG. 3(c)) in being further provided with an annular protrusion portion (annular projection) 36 protruding to one side in the axial direction from the radially outer end portion of the end portion on one side in the axial direction. The partition wall portion 31b differs from the partition wall portion 31 of the first example (refer to FIG. 3(c)) in not having the covering scratch 33.

A radial width dimension Wa and an axial height H of the annular protrusion portion 36 can be arbitrarily set. The radial width dimension Wa of the annular protrusion portion 36 is preferably set to a range of 15% to 35% of a radial width dimension Wb of the end portion of the finally obtained tubular member 21a on one side in the axial direction. The axial height H of the annular protrusion portion 36 is preferably set to be larger than the thickness of an oxide film (black skin) formed in the finally obtained tubular member 21a in the main step. For example, it is preferably set to a range of three times to five times the thickness of the oxide film. The foregoing numerical values are merely examples, and they are not limited thereto.

In the present example, the axial dimension of the intermediate material 32b is larger than the axial dimension of the finally obtained tubular member 21a by the amount corresponding to the axial height H of the annular protrusion portion 36.

The forming step is performed using a press processing apparatus 35B as shown in FIG. 15. With regard to the press processing apparatus 35 of the first example (refer to FIG. 6), the press processing apparatus 35B differs only in the shape of an annular surface portion 35Bc2 provided in a punch 35Bc. That is, in the present example, the annular surface portion 35Bc2 is provided in an annular recessed portion 35Bc3 recessed in the axial direction in the radially outer side part.

When processing is performed with respect to the disk-shaped material 25b using the press processing apparatus 35B to obtain the intermediate material 32b, first, the radially outer end edge portion on the end surface of the disk-shaped material 25b on the other side in the axial direction is engaged with the end portion of the curved surface portion 35a3 of the dice 35a on one side in the axial direction, thereby holding the disk-shaped material 25b on the radially inner side of the large diameter portion 35a1 of the dice 35a.

Next, the punch 35Bc is moved to the other side in the axial direction, and the radially central portion of the disk-shaped material 25b is pressed by the end surface of the protrusion portion 35c1 of the punch 35Bc on the other side in the axial direction. Accordingly, the material in the central portion of the disk-shaped material 25b is moved to the other side in the axial direction and moved to a part between the outer circumferential surface of the protrusion portion 35c1 and the inner circumferential surface of the dice 35a while being crushed in the axial direction between the end surface of the protrusion portion 35c1 on the other side in the axial direction and the end surface of the dice pin 35b on one side in the axial direction. Along with this, the material of the radially outer side part of the disk-shaped material 25b is moved toward one side in the radial direction between the outer circumferential surface of the protrusion portion 35c1 and the inner circumferential surface of the dice 35a while being crushed in the radial direction between the outer circumferential surface of the protrusion portion 35c1 and the inner circumferential surface of the dice 35a. Accordingly, the intermediate material 32b is obtained.

In the present example, as described above, a part of the material which has moved toward one side in the radial direction between the outer circumferential surface of the protrusion portion 35c1 and the inner circumferential surface of the dice 35a enters the entire annular recessed portion 35Bc3, thereby forming the annular protrusion portion 36.

In the present example, in the forming step, since the annular protrusion portion 36 protruding to one side in the axial direction is formed in the radially outer end portion of the end portion of the intermediate tube portion 30a on one side in the axial direction, the radially outer end portion on the end surface of the intermediate tube portion 30a on one side in the axial direction can be prevented from having an underfill shape as indicated by the dashed line α in FIG. 23.

In the punching step, the radially inner side part of the intermediate tube portion 30a constituting the intermediate material 32b and the partition wall portion 31b are punched out in the axial direction to obtain a preliminary tubular member 37 as shown in FIG. 14(c).

The shape of the preliminary tubular member 37 is the same shape as a part of the intermediate tube portion 30a excluding the radially inner side part. For this reason, in the present example, the radially outer end portion on the end surface of the preliminary tubular member 37 on one side in the axial direction obtained in the punching step can be prevented from having an underfill shape as indicated by the dashed line α in FIG. 23.

In the removing step, the annular protrusion portion 36 of the preliminary tubular member 37 is removed by cutting processing to obtain the tubular member 21a as shown in FIG. 14(d).

In the present example, since the tubular member 21a is obtained in this manner, the radially outer end portion on the end surface of the tubular member 21a on one side in the axial direction can be prevented from having an underfill shape as indicated by the dashed line α in FIG. 23. In the case of the present example as well, finishing processing is performed in the finishing step with respect to the tubular member 21a obtained in this manner to obtain the inner ring 10.

In the present example, in order to prevent the shape of the radially outer end portion on the end surface of the tubular member 21a on one side in the axial direction from having an underfill shape as indicated by the dashed line α in FIG. 23, the volume of the raw material 20a is increased by an amount corresponding to the annular protrusion portion 36 to be formed. However, the amount of increased volume can be sufficiently reduced compared to when the entire thickness of the machining allowance provided in the tubular member is increased. Therefore, the tubular member 21a can be manufactured at low cost. Other constitutions and operational effects of the fifth example are similar to those of the first example.

### [Sixth example]

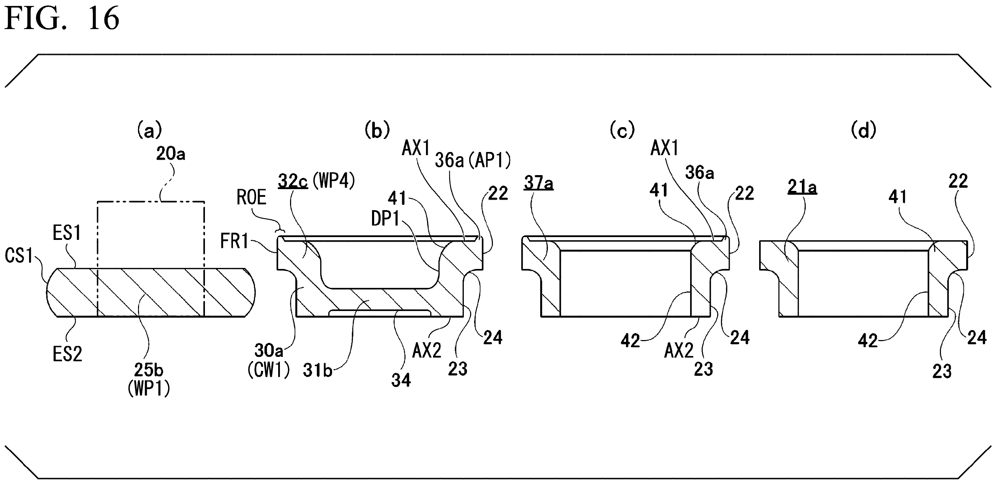

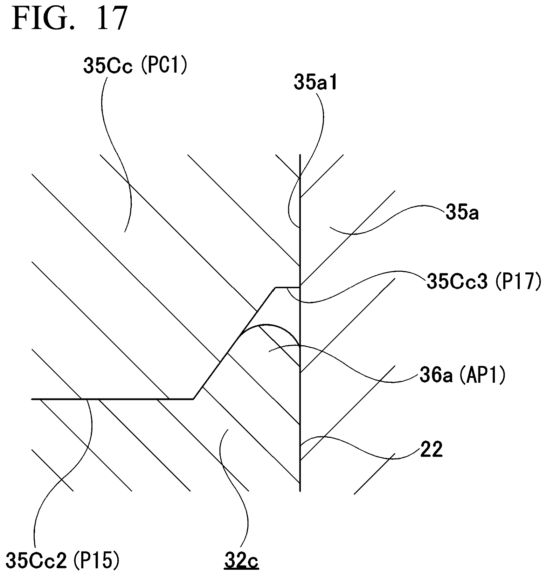

A sixth example will be described using FIGS. 16 and 17.

In the method for manufacturing the inner ring 10 of the present example (refer to FIG. 1), the upsetting step, the punching step, the removing step, and the finishing step are similar to the upsetting step, the punching step, the removing step, and the finishing step of the fifth example. Hereinafter, the forming step of the method for manufacturing the inner ring 10 of the present example will be described.

In the present example, in the forming step, the end surface of an annular protrusion portion 36a constituting an intermediate material 32c on one side in the axial direction is prevented from coming into contact with the forming die for performing plastic processing as in the forward/rearward extrusion processing. More specifically, as shown in FIG. 17, the end surface of the annular protrusion portion 36a on one side in the axial direction is prevented from coming into contact with an annular recessed portion 35Cc3 of an annular surface portion 35Cc2 provided in a punch 35Cc. For this reason, in the present example, the processing load during the second step can be reduced compared to the first example in which the end surface of the annular protrusion portion 36 on one side in the axial direction is brought into contact with the forming die for performing plastic processing. As a result, the dice 35a, the dice pin 35b, and the punch 35Cc have a long lifespan so that manufacturing costs of the inner ring 10 can be reduced. Other constitutions and operational effects of the sixth example are similar to those of the fifth example.

### [Seventh example]

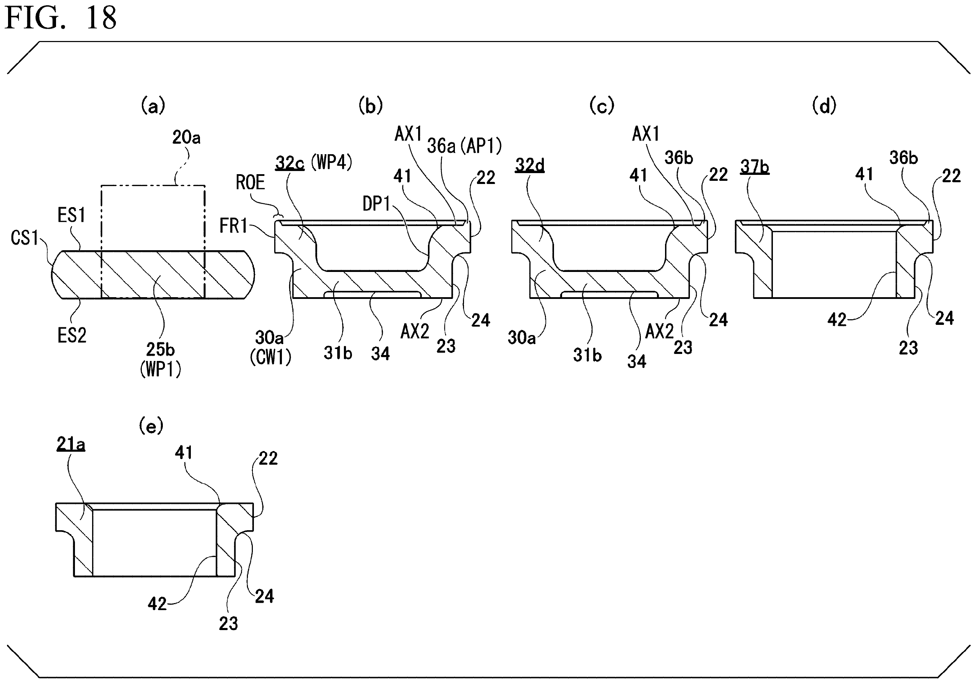

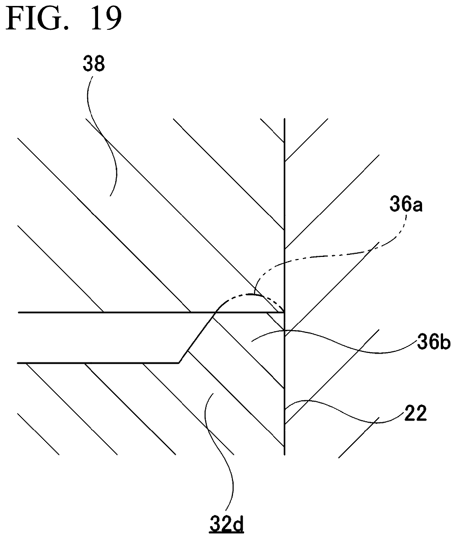

A seventh example will be described using FIGS. 18 and 19.

In the method for manufacturing the inner ring 10 of the present example (refer to FIG. 1), the upsetting step (refer to FIG. 18(a)), the forming step (refer to FIG. 18(b)), the punching step (refer to FIG. 18(d)), the removing step, and the finishing step are similar to the upsetting step (refer to FIG. 16(a)), the forming step (refer to FIG. 16(b)), the punching step (refer to FIG. 16(c)), the removing step, and the finishing step in the sixth example. The method for manufacturing the inner ring 10 of the present example includes a uniformizing step (refer to FIG. 16(c)) for aligning the axial height of the annular protrusion portion 36a before the removing step.

In the present example, similar to the sixth example, in the forming step, as shown in FIG. 17, the end surface of the annular protrusion portion 36a on one side in the axial direction is prevented from coming into contact with the annular recessed portion 35Cc3 of the punch 35Cc. For this reason, the shape of the end surface of the annular protrusion portion 36a on one side in the axial direction may not match the shape of the bottom surface of the annular recessed portion 35Cc3, and there is a probability that the axial height of the annular protrusion portion 36a will not be uniform across the entire circumference. When the axial height of the annular protrusion portion 36a is not uniform across the entire circumference, cutting of the annular protrusion portion 36a is performed intermittently in the removing step so that it is difficult to perform the cutting.

Hence, in the present example, in the uniformizing step before starting the punching step, as shown in FIG. 19, the tip surface of a punch 38 constituting a press processing apparatus is pressed against the end surface of the annular protrusion portion 36a on one side in the axial direction to crush the annular protrusion portion 36a in the axial direction. Accordingly, an annular protrusion portion 36b having a uniformized axial height across the entire circumference is formed. Accordingly, cutting of the annular protrusion portion 36b is performed continuously in the finishing step so that it is easy to perform the cutting. Other constitutions and operational effects of the seventh example are similar to those of the sixth example.

### [Eighth example]

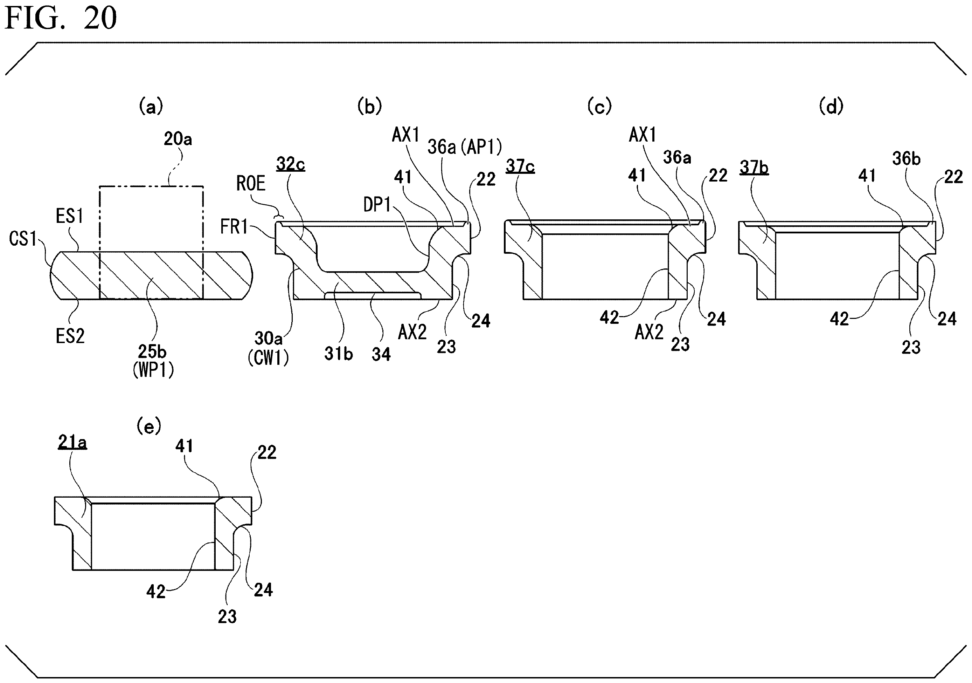

An eighth example will be described using FIG. 20.

In the method for manufacturing the inner ring 10 of the present example (refer to FIG. 1), the order of the uniformizing step and the punching step is reversed from that in the case of the seventh example. That is, in the present example, the uniformizing step is performed after the punching step ends. Other constitutions and operational effects of the eighth example are similar to those of the seventh example.

Each of the examples of the embodiment described above can be performed suitably in combination within a range causing no contradictions.

### REFERENCE SIGNS LIST

1 Hub unit bearing
2 Outer ring
3 Hub
4a, 4b Rolling element
5a, 5b Outer ring trajectory
6 Stationary flange
7a, 7b Inner ring trajectory
8 Rotating flange
9 Hub ring
10 Inner ring
11 Small diameter stepped portion
12 Stepped surface
13 Spline hole
14 Rolling element installation space
15a, 15b Sealing device
16 Seal ring
17 Slinger
18 Large diameter portion
19 Small diameter portion
20, 20a Raw material
21, 21a Tubular member
22, 22a Large diameter portion
23, 23a Small diameter portion
24, 24a Connection surface portion
25, 25a, 25b Disk-shaped material
26, 26a, 26b Preliminary intermediate tube portion
27, 27a Partition wall portion
28, 28a Preliminary intermediate material
29, 29A Press processing apparatus
   29a, 29Aa Dice
      29a1 Large diameter portion
      29a2 Small diameter portion
      29a3 Curved surface portion
   29b Dice pin
   29c, 29Ac Punch
      29c1, 29Ac1 Protrusion portion
      29c2 Annular surface portion
30, 30a Intermediate tube portion
31, 31a, 31b Partition wall portion
32, 32a, 32b, 32c, 32d Intermediate material
33, 33a Covering scratch
34 Recessed portion
35, 35A, 35B Press processing apparatus
   35a Dice
      35a1 Large diameter portion
      35a2 Small diameter portion
      35a3 Curved surface portion
   35b, 35Ab Dice pin
      35b1 Protrusion portion
   35c, 35Bc, 35Cc Punch
      35c1 Protrusion portion
      35c2, 35Bc2, 35Cc2 Annular surface portion
      35Bc3, 35Cc3 Annular recessed portion
36, 36a, 36b Annular protrusion portion
37, 37a, 37b, 37c Preliminary tubular member
38 Punch
39 Inclined surface portion
40 Cylinder surface portion
41 Inclined surface portion
42 Cylinder surface portion
100 Inner ring
101 Inner ring trajectory
102 Large diameter portion
103 Small diameter portion
104 Tubular member
105 Disk-shaped material
106 Intermediate material
107 Intermediate tube portion
108 Partition wall portion
AP1 Annular projection
AX1 First axial surface
AX2 Second axial surface
DP1 Depression
FR1, FRG Flange
ROE Radially outer end portion

## Claims

1. A method for manufacturing a bearing element comprising:
a first step of preparing a workpiece subjected to upsetting processing;
a second step of forming a depression, a flange, and a first axial surface in the workpiece by performing plastic processing once or twice, in which the depression has a depth in an axial direction with respect to the first axial surface and the flange extends radially outward; and
a third step of punching out a bottom portion of the depression of the workpiece,
wherein the first axial surface formed in the second step provides one end surface of the bearing element, and
the flange formed in the second step has a surface height substantially the same as or higher than the first axial surface in a radially outer end portion.

2. The method for manufacturing a bearing element according to claim 1,
wherein (a) the second step has a step of simultaneously forming the depression, the flange, the first axial surface, and an annular projection in the workpiece using a first punch, and the annular projection has a shape protruding axially outward with respect to the first axial surface in the radially outer end portion of the flange, or
(b) the second step has a step of forming a preliminary depression in the workpiece using a second punch and then simultaneously forming the depression, the flange, and the first axial surface in the workpiece using a third punch, and simultaneous formation of the depression, the flange, and the first axial surface includes enhancement of corners of the flange in the radially outer end portion.

3. The method for manufacturing a bearing element according to claim 2,
wherein the first punch has a first base portion, a first projection portion, a first punch surface including a tip area of the first projection portion, a second punch surface including an outer circumferential surface of the first projection portion, a third punch surface including an annular surface provided in the first base portion, a fourth punch surface serving as a transition surface between the second punch surface and the third punch surface, and a step provided in the vicinity of a radially outer edge on the first punch surface and extending in a circumferential direction.

4. The method for manufacturing a bearing element according to claim 2,
wherein the second punch has a second base portion and a second projection portion,
the third punch has a third base portion and a third projection portion,
the third projection portion of the third punch has a smaller axial length than the second projection portion of the second punch, and
an inclination of an outer circumferential surface of the second projection portion in the second punch with respect to a center axis is larger than an inclination of an outer circumferential surface of the third projection portion in the third punch with respect to the center axis.

5. The method for manufacturing a bearing element according to claim 2,
wherein the second punch has a second base portion and a second projection portion,
the third punch has a third base portion and a third projection portion,
the third projection portion of the third punch has a smaller axial length than the second projection portion of the second punch,
an outer diameter of the second base portion is substantially the same as an outer diameter of the third base portion, and
an average outer diameter of the second projection portion is larger than an average outer diameter of the third projection portion.

6. A method for manufacturing a bearing comprising:
a step of manufacturing a bearing element by the manufacturing method according to any one of claims 1 to 5; and
a step of assembling a bearing using the bearing element.

7. A method for manufacturing a mechanical device comprising:
a step of manufacturing a bearing element by the manufacturing method according to any one of claims 1 to 5.

8. A method for manufacturing a vehicle comprising:
a step of manufacturing a bearing element by the manufacturing method according to any one of claims 1 to 5.

9. A bearing comprising:
a bearing element having a trace indicating that the bearing element was manufactured by the manufacturing method according to any one of claims 1 to 5.

10. A bearing element comprising:
a main body having a tubular body and a flange extending outward from the tubular body,
wherein the main body further has a first axial surface that is one end surface in an axial direction, a second axial surface that is another end surface in the axial direction, an inner circumferential surface of the tubular body, a first outer circumferential surface that is an outer circumferential surface of the tubular body, a second outer circumferential surface that is an outer circumferential surface of the flange, and a transition surface between the first outer circumferential surface and the second outer circumferential surface,
the flange has a first corner between the first axial surface and the second outer circumferential surface, and a second corner between the transition surface and the second outer circumferential surface,
a metal flow of the main body has
a first pattern which continues along the first axial surface in the vicinity of the first axial surface,
a second pattern which continues along the second outer circumferential surface in the vicinity of the second outer circumferential surface,
a third pattern which continues along the transition surface in the vicinity of the transition surface, and
a plurality of continuous lines each of which continues across the first pattern, the second pattern, and the third pattern,
an interval between the plurality of continuous lines in the third pattern is narrower than an interval between the plurality of continuous lines in the first pattern,
the plurality of continuous lines have a plurality of corner elements arranged in the vicinity of the first corner, and
the plurality of corner elements have angles that gradually becomes sharper as they approach the first corner.

11. The bearing element according to claim 10,
wherein the metal flow of the main body has a fourth pattern including a plurality of line elements extending in a direction oblique to a center axis of the main body from the inner circumferential surface toward the transition surface,
in the fourth pattern, an interval between the plurality of line elements in a radially outward area is narrower than an interval between the plurality of line elements in a radially inward area, and
in the fourth pattern, the plurality of line elements in the radially outward area each have partially convex curves directed radially inward.

12. A bearing comprising:
the bearing element according to claim 10 or 11.

13. A mechanical device comprising:
the bearing according to claim 12.

14. A vehicle comprising:
the bearing according to claim 12.

15. A method for manufacturing a tubular member provided with an outer circumferential surface having a cylinder surface-shaped large diameter portion provided in one side part in an axial direction, a cylinder surface-shaped small diameter portion provided in the other side part in the axial direction, and a connection surface portion connecting the large diameter portion and the small diameter portion, the manufacturing method comprising:
an upsetting step of crushing a columnar raw material in the axial direction to obtain a disk-shaped material having an axial dimension smaller than an axial dimension of the raw material and an outer diameter larger than an outer diameter of the raw material;
a forming step of performing plastic processing with respect to the disk-shaped material to obtain an intermediate material including an intermediate tube portion having the large diameter portion, the small diameter portion, and the connection surface portion on an outer circumferential surface and a partition wall portion blocking an end portion opening of the intermediate tube portion on the other side in the axial direction; and
a punching step of punching out a radially inner side part of the intermediate tube portion and the partition wall portion in the axial direction,
wherein an axial dimension of the intermediate material or an axial dimension of a preliminary intermediate material obtained in the middle of the forming step is larger than an axial dimension of the tubular member.

16. The method for manufacturing a tubular member according to claim 15,
wherein the tubular member is provided with an inner circumferential surface having an inclined surface portion which is provided in an end portion on one side in the axial direction and of which an inner diameter increases toward the one side in the axial direction, and a cylinder surface portion which is provided in an axially intermediate portion and an end portion on the other side in the axial direction, and
the intermediate tube portion has the inclined surface portion in an end portion on an inner circumferential surface on one side in the axial direction.

17. The method for manufacturing a tubular member according to claim 15,
wherein the forming step includes
a preforming step of performing plastic processing with respect to the disk-shaped material to obtain the preliminary intermediate material having a preliminary intermediate tube portion and the partition wall portion blocking an end portion opening of the preliminary intermediate tube portion on the other side in the axial direction, and
a post-forming step of crushing the preliminary intermediate material in the axial direction on an inner side on an inner circumferential surface of a dice having a shape along an outer circumferential surface of the intermediate material to obtain the intermediate material, and
the axial dimension of the preliminary intermediate material is larger than the axial dimension of the tubular member, and the axial dimension of the intermediate material is equivalent to the axial dimension of the tubular member.

18. The method for manufacturing a tubular member according to claim 17,
wherein in the preforming step, at least a radially outer side part on an end surface of the preliminary intermediate tube portion on one side in the axial direction is prevented from coming into contact with a forming die for performing plastic processing.

19. The method for manufacturing a tubular member according to claim 17,
wherein an outer diameter of one side part of the preliminary intermediate tube portion in the axial direction is slightly smaller than an outer diameter of the large diameter portion, and an outer diameter of the other side part of the preliminary intermediate tube portion in the axial direction is slightly smaller than an outer diameter of the small diameter portion.

20. The method for manufacturing a tubular member according to claim 16,
wherein the intermediate tube portion has an annular protrusion portion protruding to one side in the axial direction in the radially outer end portion on the end surface on one side in the axial direction,
the forming step is a step of obtaining the intermediate material by performing plastic processing with respect to the disk-shaped material,
the axial dimension of the intermediate material is larger than the axial dimension of the tubular member by the amount corresponding to an axial height of the annular protrusion portion, and
the manufacturing method further comprises a removing step of removing the annular protrusion portion after the forming step.

21. The method for manufacturing a tubular member according to claim 20,
wherein in the forming step, an end surface of the annular protrusion portion on one side in the axial direction is prevented from coming into contact with a forming die for performing plastic processing.

22. The method for manufacturing a tubular member according to claim 21 comprising:
a uniformizing step of crushing the annular protrusion portion formed in the forming step in the axial direction before the removing step to uniformize the axial height of the annular protrusion portion across the entire circumference.

23. A method for manufacturing a mechanical device including a tubular mechanical component provided with an outer circumferential surface having a cylinder surface-shaped large diameter portion provided in one side part in an axial direction, a cylinder surface-shaped small diameter portion provided in the other side part in the axial direction, and a connection surface portion connecting the large diameter portion and the small diameter portion, the manufacturing method comprising:
a step of performing finishing processing with respect to a tubular member manufactured by the method for manufacturing a tubular member according to any one of claims 15 to 22 to manufacture the mechanical component.

24. The method for manufacturing a mechanical device according to claim 23,
wherein the mechanical component is an inner ring, and the connection surface portion of the mechanical component is constituted of an inner ring trajectory having a circular arc-shaped cross section, and
the mechanical device is a bearing device.

25. The method for manufacturing a mechanical device according to claim 24,
wherein the bearing device is a hub unit bearing for rotatably supporting a wheel of an automobile with respect to a suspension device.

26. A method for manufacturing a vehicle including a mechanical device, the manufacturing method comprising:
a step of manufacturing the mechanical device by the method for manufacturing a mechanical device according to claim 23.

27. A mechanical device including a tubular mechanical component provided with an outer circumferential surface having a cylinder surface-shaped large diameter portion provided on one side in an axial direction, a cylinder surface-shaped small diameter portion provided in the other side part in the axial direction, and a connection surface portion connecting the large diameter portion and the small diameter portion,
wherein a metal flow inside the mechanical component has an inclined portion increasingly inclined in a direction toward an radially outer side from the other side in the axial direction toward one side in the axial direction in an axially intermediate portion of the mechanical component, and
the metal flow is denser in the inclined portion than in parts present around the inclined portion.

28. The mechanical device according to claim 27,
wherein the mechanical component is an inner ring, and the connection surface portion of the mechanical component is constituted of an inner ring trajectory having a circular arc-shaped cross section, and
the mechanical device is a bearing device.

29. The mechanical device according to claim 28,
wherein the bearing device is a hub unit bearing for rotatably supporting a wheel of an automobile with respect to a suspension device.

30. A vehicle comprising:
the mechanical device according to any one of claims 27 and 28.
